(19) Europäisches Patentamt / European Patent Office / Office européen des brevets

(11) **EP 2 856 663 B1**

# (12) FASCICULE DE BREVET EUROPEEN

(45) Date de publication et mention de la délivrance du brevet:
**01.06.2016 Bulletin 2016/22**

(21) Numéro de dépôt: **13722486.1**

(22) Date de dépôt: **16.04.2013**

(51) Int Cl.:
*H04B 7/04* (2006.01)   *H04L 1/04* (2006.01)
*H04L 5/00* (2006.01)   *H04L 25/02* (2006.01)
*H04L 27/26* (2006.01)   *H04L 27/36* (2006.01)
*H04B 7/06* (2006.01)   *H04B 7/08* (2006.01)
*H04L 1/06* (2006.01)

(86) Numéro de dépôt international:
**PCT/FR2013/050833**

(87) Numéro de publication internationale:
**WO 2013/160582 (31.10.2013 Gazette 2013/44)**

## (54) PROCEDE DE COMMUNICATION SANS-FIL AVEC UN RECEPTEUR A ANTENNES MULTIPLES

VERFAHREN ZUR DRAHTLOSEN KOMMUNIKATION MIT EINEM MEHRFACHANTENNENEMPFÄNGER

METHOD OF WIRELESS COMMUNICATION WITH A MULTI-ANTENNA RECEIVER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.04.2012 FR 1253922**

(43) Date de publication de la demande:
**08.04.2015 Bulletin 2015/15**

(73) Titulaire: **Orange**
**75015 Paris (FR)**

(72) Inventeur: **PHAN HUY, Dinh Thuy**
**F-75004 Paris (FR)**

(56) Documents cités:
- **PIERRE SIOHAN ET AL: "Analysis and Design of OFDM/OQAM Systems Based on Filterbank Theory", IEEE TRANSACTIONS ON SIGNAL PROCESSING, IEEE SERVICE CENTER, NEW YORK, NY, US, vol. 50, no. 5, 1 mai 2002 (2002-05-01), XP011080136, ISSN: 1053-587X**

- **CHRISLIN LELE, PIERRE SIOHAN, RODOLPHE LEGOUABLE: "The Alamouti Scheme with CDMA-OFDM/OQAM", EURASIP JOURNAL ON ADVANCES IN SIGNAL PROCESSING, 18 janvier 2010 (2010-01-18), pages 1-13, XP002688650,**
- **HAO LIN ET AL: "A pseudo alamouti transceiver design for OFDM/OQAM modulation with cyclic prefix", SIGNAL PROCESSING ADVANCES IN WIRELESS COMMUNICATIONS, 2009. SPAWC '09. IEEE 10TH WORKSHOP ON, IEEE, PISCATAWAY, NJ, USA, 21 juin 2009 (2009-06-21), pages 300-304, XP031487837, ISBN: 978-1-4244-3695-8**
- **VIDAR RINGSET ET AL: "Performance of a FilterBank MultiCarrier (FBMC) physical layer in the WiMAX context", 2010 FUTURE NETWORK & MOBILE SUMMIT 16-18 JUNE, IEEE, IEEE PISCATAWAY, JJ, USA, 16 juin 2010 (2010-06-16), pages 1-8, XP031921958, ISBN: 978-1-905824-16-8**
- **MIQUEL PAYAROÌ ET AL: "Performance comparison between FBMC and OFDM in MIMO systems under channel uncertainty", WIRELESS CONFERENCE (EW), 2010 EUROPEAN, IEEE, PISCATAWAY, NJ, USA, 12 avril 2010 (2010-04-12), pages 1023-1030, XP031688574, ISBN: 978-1-4244-5999-5**

EP 2 856 663 B1

**EP 2 856 663 B1**

**Description**

La présente invention concerne les communications sans-fil, notamment les communications radio selon les normes IEEE 802.11, IEEE 802.16, 3GPP LTE Advanced, et DVB.

Plus précisément, l'invention concerne un système de transmission de données comprenant un émetteur équipé d'une ou plusieurs antenne(s) d'émission, et un récepteur équipé d'au moins deux antennes de réception. Un tel système est dit SIMO (initiales des mots anglais « *Single Input Multiple Output* ») lorsque le système ne comprend qu'une seule antenne d'émission, et MIMO (initiales des mots anglais « *Multiple Input Multiple Output* ») lorsque le système comprend plusieurs antennes d'émission.

Par rapport aux systèmes SISO (initiales des mots anglais « *Single Input Single Output* ») comportant une seule antenne d'émission et une seule antenne de réception, les systèmes SIMO/MIMO ont pour avantage, grâce à la diversité spatiale du canal de propagation, d'améliorer la qualité de transmission des données en réduisant le taux d'erreurs de transmission pour une puissance d'émission donnée. On rappelle à cet égard que la technique dite de « diversité spatiale » consiste à transmettre simultanément un même message sur une ou plusieurs antennes d'émission, puis à combiner adéquatement les signaux respectifs reçus sur chacune des antennes de réception.

On rappelle par ailleurs que la modulation dite OFDM (initiales des mots anglais « *Orthogonal Frequency Division Multiplexing* » signifiant « Multiplexage de Fréquences Orthogonales ») réduit efficacement les interférences entre symboles de données. De plus, l'OFDM est relativement peu complexe à mettre en oeuvre ; notamment, la modulation d'un signal en OFDM peut être mise en oeuvre de manière efficace au moyen d'une transformée de Fourier rapide inverse (IFFT), et la démodulation d'un signal OFDM peut être mise en oeuvre de manière efficace au moyen d'une transformée de Fourier rapide directe (FFT). Toutefois, la modulation OFDM présente l'inconvénient d'être peu efficace spectralement (en raison de l'utilisation d'un « préfixe cyclique »).

Il a donc été proposé une autre modulation, appelée « OFDM/OQAM », qui présente l'avantage d'être efficace spectralement (car elle ne nécessite pas de préfixe cyclique, contrairement à l'OFDM), tout en s'affranchissant (comme l'OFDM) des interférences entre symboles de manière peu complexe (l'acronyme OQAM est formé des initiales des mots anglais « *Offset Quadrature Amplitude Modulation* » signifiant « Modulation d'Amplitude en Quadrature Décalée »).

En particulier, l'article de P. Siohan, C. Siclet, et N. Lacaille intitulé « Analysis and Design of OFDM/OQAM Systems Based on Filterbank Theory » (IEEE Transactions on Signal Processing, vol. 50 n° 5, pages 1170 à 1183, mai 2002) montre comment on peut également mettre en oeuvre la modulation OFDM/OQAM au moyen d'une IFFT et la démodulation OFDM/OQAM au moyen d'une FFT. Malheureusement, la technique présentée dans cet article concerne spécifiquement un système SISO, et ne permet donc pas de bénéficier de la diversité spatiale des systèmes SIMO/MIMO.

La présente invention concerne donc un procédé d'émission sans-fil, par un émetteur muni de $M \geq 1$ antenne(s) d'émission, de données destinées à un récepteur muni de $N \geq 2$ antennes de réception, dans lequel lesdites données sont transmises au moyen d'une modulation OFDM/OQAM comprenant $L \geq 1$ sous-porteuses. Ledit procédé d'émission est remarquable en ce que, pour au moins une valeur de l'entier $l$, où $0 \leq l \leq L$ -1, ledit émetteur met en oeuvre $N$ étapes, l'étape de numéro $p$, où $p = 0,1, ..., N$ - 1, comprenant les sous-étapes suivantes :

- codage (E1_p) d'un vecteur de données $X^{(l)}$ à $N$ composantes réelles en un vecteur de données codé $W^{(l,p)} = \Pi^{(p)}(A^{(l)}.X^{(l)})$, où $A^{(l)}$ est un vecteur de codage prédéterminé à $N$ composantes non-nulles, la notation « U.V » désigne le résultat de la multiplication terme à terme de deux vecteurs $U$ et $V$ de même longueur, et $\Pi^{(p)}(U)$ désigne la permutation circulaire de $r$ crans des composantes d'un vecteur $U$, où $r = p + c$ ou $r = -p + c$, et $c$ est un entier relatif prédéterminé, et
- émission (E2_p) dudit vecteur de données codé $W^{(l,p)}$ sur chacune des $M$ antennes d'émission sur la sous-porteuse $l$, avec un précodage à Retournement Temporel utilisant une estimation $\hat{H}^{(l)}$ de la matrice de transfert du canal MIMO qui relie ledit émetteur audit récepteur pour la sous-porteuse $l$ et focalisant la $n$-ième composante du vecteur de données codé $W^{(l,p)}$, où $n = 1,2, ...,N$, sur la $n$-ième antenne de réception.

Corrélativement, l'invention concerne un procédé de réception sans-fil par un récepteur muni de $N \geq 2$ antennes de réception, dans lequel les données reçues ont été transmises au moyen d'une modulation OFDM/OQAM comprenant $L \geq 1$ sous-porteuses. Ledit procédé de réception est remarquable en ce que, pour au moins une valeur de l'entier $l$, où $0 \leq l \leq L$-1:

a) ledit récepteur met tout d'abord en oeuvre $N$ étapes, l'étape de numéro $p$, où $p = 0,1, ... , N$ - 1, comprenant les sous-étapes suivantes :

- détermination (R1_p) d'un vecteur reçu $Y^{(l,p)}$ à $N$ composantes réelles, dont la $n$-ième composante, où $n = 1,2, ...,N$, est égale au symbole associé à la sous-porteuse $l$ reçu sur la $n$-ième antenne de réception, après démodulation OFDM/OQAM et extraction de la partie réelle, et

2

- codage (R2_p) dudit vecteur reçu $\mathbf{Y}^{(\mathbf{l},\mathbf{p})}$ en un vecteur reçu codé

$$\mathbf{Z}^{(\mathbf{l},\mathbf{p})} = \mathbf{A}^{(\mathbf{l})} \cdot \left( \mathbf{\Pi}^{(\mathbf{p})}(\mathbf{Y}^{(\mathbf{l},\mathbf{p})}) \right),$$

où $\mathbf{A}^{(\mathbf{l})}$ est un vecteur de codage prédéterminé à $N$ composantes non-nulles, la notation « $\mathbf{U}.\mathbf{V}$ » désigne le résultat de la multiplication terme à terme de deux vecteurs $\mathbf{U}$ et $\mathbf{V}$ de même longueur, $\Pi^{(p)}(\mathbf{U})$ désigne la permutation circulaire de $r$ crans des composantes d'un vecteur $\mathbf{U}$, où $r = p + c$ ou $r = -p + c$, et $c$ est un entier relatif prédéterminé,

b) le récepteur calcule (R3) un vecteur décodable

$$\mathbf{F}^{(\mathbf{l})} = \sum_{\mathbf{p}=\mathbf{0}}^{\mathbf{N}-\mathbf{1}} \mathbf{Z}^{(\mathbf{l},\mathbf{p})} \, ,$$

et

c) le récepteur calcule (R4) un vecteur de données décodées $\mathbf{T}^{(\mathbf{l})}$ comme suit :

$$\mathbf{T}^{(\mathbf{l})} = \mathbf{S}^{(\mathbf{l})} \cdot \mathbf{F}^{(\mathbf{l})},$$

où $\mathbf{S}^{(\mathbf{l})} = (\mathbf{R}^{(\mathbf{l})})^{-1}$ et $\mathbf{R}^{(\mathbf{l})}$ est la matrice du canal MIMO équivalent entre l'émetteur et le récepteur pour la sous-porteuse $l$, définie par

$$\mathbf{F}^{(\mathbf{l})} = \mathbf{R}^{(\mathbf{l})} \cdot \mathbf{X}^{(\mathbf{l})} + \mathbf{B}^{(\mathbf{l})},$$

où $\mathbf{B}^{(\mathbf{l})}$ est un terme de bruit thermique.

L'invention concerne également un procédé de communication sans-fil, comprenant les étapes d'un procédé d'émission tel que décrit succinctement ci-dessus, ainsi que les étapes d'un procédé de réception tel que décrit succinctement ci-dessus, et dans lequel lesdites étapes de numéro $p$, où $p = 0,1, ..., N - 1$, sont synchronisées entre l'émetteur et le récepteur.

En effet, on peut montrer que le vecteur de données décodées $\mathbf{T}^{(\mathbf{l})}$ obtenu comme décrit succinctement ci-dessus est (en l'absence de distorsions de canal) égal au vecteur de données $\mathbf{X}^{(\mathbf{l})}$ destiné à être transmis par l'émetteur au récepteur.

Ainsi, les procédés décrits succinctement ci-dessus combinent un codage/décodage propre à l'invention avec un précodage par Retournement Temporel. Cette combinaison selon l'invention permet de bénéficier des avantages de la modulation OFDM/OQAM, et notamment de son efficacité spectrale ; on notera à cet égard que l'on émet successivement $N$ codages différents dudit vecteur $\mathbf{X}^{(\mathbf{l})}$, lequel comprend $N$ composantes réelles, de sorte que l'on transmet, en moyenne, une donnée réelle par émission et par sous-porteuse. De plus, l'invention permet d'exploiter la diversité spatiale des systèmes MIMO. Enfin, la mise en oeuvre dudit procédé de réception ne requiert, avantageusement, qu'une complexité relativement faible au niveau du récepteur, quel que soit le nombre d'antennes d'émission ou de réception ; en particulier, les opérations mathématiques à effectuer sont de faible complexité (circulations de matrices, multiplications matricielles, et -- seulement occasionnellement -- inversions matricielles).

A titre de comparaison, on pourra se référer à l'article de C. Lélé, P. Siohan et R. Legouable intitulé « The Alamouti Scheme with CDMA-OFDM/OQAM » (Eurasip Journal on Advances in Signal Processing, n° 8, 2010), qui propose une application de la modulation OFDM/OQAM à des systèmes MISO (initiales des mots anglais « *Multiple Input Single Output* ») comportant deux antennes d'émission et une unique antenne de réception. Cette technique est fondée sur des codes particuliers, dits « codes d'Alamouti ». Or cette technique cause des interférences entre symboles (plus précisément, elle permet l'orthogonalité entre symboles dans le domaine réel, mais pas dans le domaine imaginaire), et l'élimination de ces interférences ne peut se faire de manière simple. Avec un plus grand nombre d'antennes de réception (cas du MIMO), les traitements requis pour éliminer les interférences causées par cette technique seraient encore plus complexes.

Or, très avantageusement, la combinaison selon la présente invention d'un codage/décodage spécifique (complètement différent des codes d'Alamouti) avec un précodage par Retournement Temporel permet d'éviter toute interférence entre les symboles obtenus après décodage, et ce, quel que soit le nombre d'antennes d'émission ou de réception.

Selon des caractéristiques particulières, ledit vecteur de codage $\mathbf{A}^{(l)}$ est tel que toutes ses composantes soient égales entre elles. En variante, dans le cas où le nombre d'antennes de réception N est pair, ledit vecteur de codage $\mathbf{A}^{(l)}$ est tel que ses composantes d'indices pairs soient égales entre elles, et ses composantes d'indices impairs soient égales entre elles et opposées aux composantes d'indices pairs.

Grâce à ces dispositions, dans les deux variantes ci-dessus, la matrice du canal équivalent $\mathbf{R}^{(l)}$ est une matrice circulante, et son inversion peut donc être effectuée de manière peu complexe.

Corrélativement, l'invention concerne divers dispositifs.

Elle concerne ainsi, premièrement, un émetteur sans-fil muni de $M \geq 1$ antenne(s) d'émission, comprenant des moyens pour transmettre des données destinées à un récepteur muni de $N \geq 2$ antennes de réception au moyen d'une modulation OFDM/OQAM comprenant $L \geq 1$ sous-porteuses. Ledit émetteur sans-fil est remarquable en ce que, pour au moins une valeur de l'entier $l$, où $0 \leq l \leq L$ - 1, il comprend en outre des moyens pour :

- coder, pour $p = 0,1, ... N$ - 1, un vecteur de données $\mathbf{X}^{(l)}$ à $N$ composantes réelles en un vecteur de données codé $\mathbf{W}^{(l,p)} = \Pi^{(p)}(\mathbf{A}^{(l)}.\mathbf{X}^{(l)})$, où $\mathbf{A}^{(l)}$ est un vecteur de codage prédéterminé à $N$ composantes non-nulles, la notation « $\mathbf{U}.\mathbf{V}$ » désigne le résultat de la multiplication terme à terme de deux vecteurs $\mathbf{U}$ et $\mathbf{V}$ de même longueur, et $\Pi^{(p)}(\mathbf{U})$ désigne la permutation circulaire de $r$ crans des composantes d'un vecteur $\mathbf{U}$, où $r = p + c$ ou $r = -p + c$, et $c$ est un entier relatif prédéterminé, et
- émettre, pour $p = 0,1, ..., N$ -1, ledit vecteur de données codé $\mathbf{W}^{(l,p)}$ sur chacune des M antennes d'émission sur la sous-porteuse $l$, avec un précodage à Retournement Temporel utilisant une estimation $\hat{\mathbf{H}}^{(l)}$ de la matrice de transfert du canal MIMO qui relie ledit émetteur audit récepteur pour la sous-porteuse $l$ et focalisant la n-ième composante du vecteur de données codé $\mathbf{W}^{(l,p)}$, où $n = 1,2, ...,N$, sur la $n$-ième antenne de réception.

L'invention concerne aussi, deuxièmement, un récepteur sans-fil muni de $N \geq 2$ antennes de réception, comprenant des moyens pour recevoir des données qui ont été transmises au moyen d'une modulation OFDM/OQAM comprenant $L \geq 1$ sous-porteuses. Ledit récepteur sans-fil est remarquable en ce que, pour au moins une valeur de l'entier $l$, où $0 \leq l \leq L$ -1, il comprend en outre des moyens pour :

- déterminer, pour $p = 0,1, ...,N$ - 1, un vecteur reçu $\mathbf{Y}^{(l,p)}$ à $N$ composantes réelles, dont la n-ième composante, où $n = 1,2, ..., N$, est égale au symbole associé à la sous-porteuse $l$ reçu sur la n-ième antenne de réception, après démodulation OFDM/OQAM et extraction de la partie réelle,
- coder, pour $p = 0,1, ..., N$ - 1, ledit vecteur reçu $\mathbf{Y}^{(l,p)}$ en un vecteur reçu codé

$$\mathbf{Z}^{(l,p)} = \mathbf{A}^{(l)}.\left(\Pi^{(p)}(\mathbf{Y}^{(l,p)})\right),$$

où $\mathbf{A}^{(l)}$ est un vecteur de codage prédéterminé à $N$ composantes non-nulles, la notation « $\mathbf{U}.\mathbf{V}$ » désigne le résultat de la multiplication terme à terme de deux vecteurs $\mathbf{U}$ et $\mathbf{V}$ de même longueur, $\Pi^{(p)}(\mathbf{U})$ désigne la permutation circulaire de $r$ crans des composantes d'un vecteur $\mathbf{U}$, où $r = p + c$ ou $r = -p + c,$ et $c$ est un entier relatif prédéterminé,
- calculer un vecteur décodable

$$\mathbf{F}^{(l)} = \sum_{p=0}^{N-1} \mathbf{Z}^{(l,p)} ,$$

et
- calculer un vecteur de données décodées $\mathbf{T}^{(l)}$ comme suit :

$$\mathbf{T}^{(l)} = \mathbf{S}^{(l)} \cdot \mathbf{F}^{(l)},$$

où $\mathbf{S}^{(l)} = (\mathbf{R}^{(l)})^{-1}$ et $\mathbf{R}^{(l)}$ est la matrice du canal MIMO équivalent entre l'émetteur et le récepteur pour la sous-porteuse $l$, définie par

$$\mathbf{F}^{(l)} = \mathbf{R}^{(l)} \cdot \mathbf{X}^{(l)} + \mathbf{B}^{(l)},$$

où $\mathbf{B}^{(l)}$ est un terme de bruit thermique.

Les avantages offerts par ces dispositifs sont essentiellement les mêmes que ceux offerts par les procédés corrélatifs succinctement exposés ci-dessus.

On notera qu'il est possible de réaliser ces dispositifs dans le contexte d'instructions logicielles et/ou dans le contexte de circuits électroniques.

L'invention concerne également un système de communication sans-fil comprenant un émetteur sans-fil tel que décrit succinctement ci-dessus et un récepteur sans-fil tel que décrit succinctement ci-dessus, ledit émetteur et ledit récepteur étant aptes à se synchroniser mutuellement.

L'invention vise également un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour l'exécution des étapes de l'un quelconque des procédés d'émission sans-fil, ou des procédés de réception sans-fil, ou des procédés de communication sans-fil succinctement exposés ci-dessus, lorsqu'il est exécuté sur un ordinateur.

Les avantages offerts par ce programme d'ordinateur sont essentiellement les mêmes que ceux offerts par les procédés correspondants.

D'autres aspects et avantages de l'invention apparaîtront à la lecture de la description détaillée ci-dessous de modes de réalisation particuliers, donnés à titre d'exemples non limitatifs. La description se réfère aux figures qui l'accompagnent, dans lesquelles :

- la figure 1a illustre une première étape d'un procédé de modulation/émission d'un multiplex OFDM/OQAM selon l'état de l'art,
- la figure 1b illustre une deuxième étape d'un procédé de modulation/émission d'un multiplex OFDM/OQAM selon l'état de l'art,
- la figure 1c illustre une troisième étape d'un procédé de modulation/émission d'un multiplex OFDM/OQAM selon l'état de l'art,
- la figure 2 résume les étapes illustrées sur les figures 1a, 1b et 1c,
- la figure 3a illustre une première étape d'un procédé de réception/ démodulation d'un multiplex OFDM/OQAM selon l'état de l'art,
- la figure 3b illustre une deuxième étape d'un procédé de réception/ démodulation d'un multiplex OFDM/OQAM selon l'état de l'art,
- la figure 3c illustre une troisième étape d'un procédé de réception/ démodulation d'un multiplex OFDM/OQAM selon l'état de l'art,
- la figure 4 résume les étapes illustrées sur les figures 3a, 3b et 3c,
- la figure 5 représente schématiquement une permutation circulaire utilisée par l'invention,
- la figure 6 représente schématiquement, selon un mode de réalisation de l'invention, le codage d'un vecteur de données associé à une sous-porteuse du multiplex OFDM/OQAM, de manière à obtenir un vecteur de données codé,
- la figure 7 illustre l'émission dudit vecteur de données codé sur une sous-porteuse et sur l'ensemble des antennes d'émission, avec un précodage à Retournement Temporel réalisé au moyen d'un filtre temporel, selon une première variante de l'invention,
- la figure 8 illustre l'émission dudit vecteur de données codé sur une antenne d'émission et sur l'ensemble des sous-porteuses, avec un précodage à Retournement Temporel réalisé au moyen d'un filtre fréquentiel, selon une deuxième variante de l'invention,
- la figure 9 représente la détermination par le récepteur d'un vecteur reçu à N composantes réelles pour chaque sous-porteuse du multiplex OFDM/OQAM, selon un mode de réalisation de l'invention,
- la figure 10 représente le codage par le récepteur du vecteur reçu sur une sous-porteuse du multiplex OFDM/OQAM, de manière à obtenir un vecteur reçu codé, selon un mode de réalisation de l'invention, et
- la figure 11 représente le calcul de la matrice du canal MIMO équivalent entre l'émetteur et le récepteur pour une sous-porteuse du multiplex OFDM/OQAM, selon une variante de l'invention.

La présente invention s'applique à un système de communication sans-fil comprenant un émetteur muni de $M \geq 1$ antenne(s) d'émission, et un récepteur muni de $N \geq 2$ antennes de réception. La transmission de données utilise une modulation OFDM/OQAM comprenant un nombre quelconque $L \geq 1$ de sous-porteuses.

On va d'abord rappeler le principe de la modulation OFDM/OQAM.

Considérons pour commencer une modulation OFDM comportant un nombre pair $Q$ de sous-porteuses. Un signal émis $s(t)$ transportant un symbole de données complexe en QAM (initiales des mots anglais « *Quadrature Amplitude Modulation* » signifiant « Modulation d'Amplitude en Quadrature ») par sous-porteuse et par temps-symbole $T_0 = 1/F_0$ est alors agencé de manière à ce que, pour chaque paire de sous-porteuses successives, il comporte :

- sur l'une de ces sous-porteuses, un décalage temporel (« *time offset* ») égal à $T_0/2$ sur la partie imaginaire d'un symbole QAM donné, et

- sur l'autre sous-porteuse, un même décalage temporel de $T_0/2$ sur la partie réelle du même symbole QAM.

Ce signal émis peut être écrit sous la forme

$$s(t) = \sqrt{2} \sum_{l=0}^{Q-1} \sum_{j=-\infty}^{+\infty} a_{l,j} p\left(t - j\frac{T_0}{2}\right) e^{i2\pi lF_0 t} e^{i\varphi_{l,j}} \qquad (1)$$

où :

- l'entier $l$ numérote les sous-porteuses, et l'entier $j$ numérote les temps-symboles,
- les coefficients réels $a_{l,j}$ sont définis à partir des parties réelles et imaginaires des symboles QAM $c_{l,j}$ comme suit :

$$a_{2l',2j'} = \Re\{c_{2l',j'}\}, \ a_{2l',2j'+1} = \Im\{c_{2l',j'}\},$$

$$a_{2l'+1,2j'} = \Im\{c_{2l'+1,j'}\}, \ a_{2l'+1,2j'+1} = \Re\{c_{2l'+1,j'}\}, \qquad (2)$$

où $\Re\{...\}$ représente l'extraction de la partie réelle et $\Im\{...\}$ représente l'extraction de la partie imaginaire,
- les déphasages $\varphi_{l,j}$ valent :

$$\varphi_{2l',2j'} = 0, \varphi_{2l',2j'+1} = \frac{\pi}{2}, \varphi_{2l'+1,2j'} = \frac{\pi}{2}, \varphi_{2l'+1,2j'+1} = 0 \ , \ \text{et} \qquad (3)$$

- la « fonction prototype » $p(t)$ est réelle et symétrique.

Dans l'article de B. Le Floch, M. Alard et C. Berrou intitulé « Coded Orthogonal Frequency Division Multiplex » (Proc. IEEE, vol. 83, pages 982 à 996, juin 1995), qui décrit une catégorie de modulations comprenant entre autres l'OFDM/OQAM, la fonction prototype $p(t)$ est choisie de manière à ce que sa transformée de Fourier soit nulle en-dehors d'une bande de fréquences de largeur $2F_0$. Dans l'article de Siohan, Siclet et Lacaille mentionné ci-dessus, la fonction prototype $p(t)$ est choisie de manière à ce qu'elle soit nulle en-dehors de l'intervalle temporel $\left[-\frac{\lambda T_0}{2Q}, +\frac{\lambda T_0}{2Q}\right]$, où $\lambda$ est

un quelconque entier strictement positif ; si l'on discrétise le temps $t$ en intervalles de longueur $\frac{T_0}{Q}$ (durée moyenne d'échantillonnage par symbole QAM) numérotés par l'entier $k$, le support de la fonction-prototype $p[k]$ discrétisée est donc de longueur $\lambda$.

Dans le cas d'un système SISO, Siohan, Siclet et Lacaille démontrent que, pour obtenir une transmission OFDM/OQAM sans interférences entres symboles ou entre sous-porteuses, la fonction prototype $p(t)$ doit satisfaire la relation d'orthogonalité suivante :

$$G_l(z)G_l^*(z^{-1}) + G_{l+Q/2}(z)G_{l+Q/2}^*(z^{-1}) = \frac{1}{Q} \ \text{ pour } 0 \le l \le \frac{Q}{2} - 1 \ , \qquad (4)$$

où l'astérisque désigne la conjugaison complexe, et les transformées-z

$$G_l(z) \equiv \sum_k z^{-k} \, p[l + kQ] \qquad (5)$$

sont appelées « composantes polyphases d'ordre $Q$ » de la fonction prototype $p[k]$.

Siohan, Siclet et Lacaille démontrent également que la modulation OFDM/OQAM peut être avantageusement mise en oeuvre au moyen d'une IFFT, et la démodulation OFDM/OQAM peut être avantageusement mise en oeuvre au moyen d'une FFT.

Pour ce faire, le signal discrétisé

$$s[k] \equiv \sqrt{\frac{T_0}{Q}}\, s\left(\left(k - \frac{\lambda-1}{2}\right)\frac{T_0}{Q}\right)$$

$$= \sqrt{2}\sum_{l=0}^{Q-1}\sum_{j=-\infty}^{+\infty} a_{l,j}\, p\left[k - \frac{jQ}{2}\right] e^{i\frac{2\pi}{Q}l\left(k-\frac{\lambda-1}{2}\right)} e^{i\varphi_{l,j}} \qquad (6)$$

est réécrit sous la forme

$$s[k] = \sum_{l=0}^{Q-1}\sum_{j=-\infty}^{+\infty} x_l^0[j] f_l\left[k - \frac{jQ}{2}\right], \text{ où} \qquad (7)$$

$$x_l^0[j] = a_{l,j}\, e^{i\frac{\pi}{2}j}, \text{ et } f_l[k] = \sqrt{2}\,p[k]\, e^{i\frac{2\pi}{Q}l\left(k-\frac{\lambda-1}{2}+\frac{Q}{4}\right)}, \qquad (8)$$

afin de présenter ce signal comme une somme classique de $Q$ signaux entrants $x_l^0[j]$ filtrés respectivement par un ensemble de $Q$ filtres $f_l\left[k - \frac{jQ}{2}\right]$ appartenant à une « banque de filtres de synthèse » $f_l[k]$.

Après quelques calculs, il apparaît que la modulation/émission OFDM/OQAM consiste essentiellement à appliquer durant chaque temps-symbole numéro $j$ à un vecteur entrant $[a_{0,j} \cdots a_{l,j} \dots a_{Q-1,j}]^T$ (où l'exposant « $T$ » désigne la transposition) les opérations suivantes :

- chaque composante $a_{l,j}$ est multipliée par un facteur, dit de « prémodulation », égal à

$$e^{i\frac{\pi}{2}j}\, Q\sqrt{2}e^{i\frac{2\pi}{Q}l\left(k-\frac{\lambda-1}{2}+\frac{Q}{4}\right)},$$

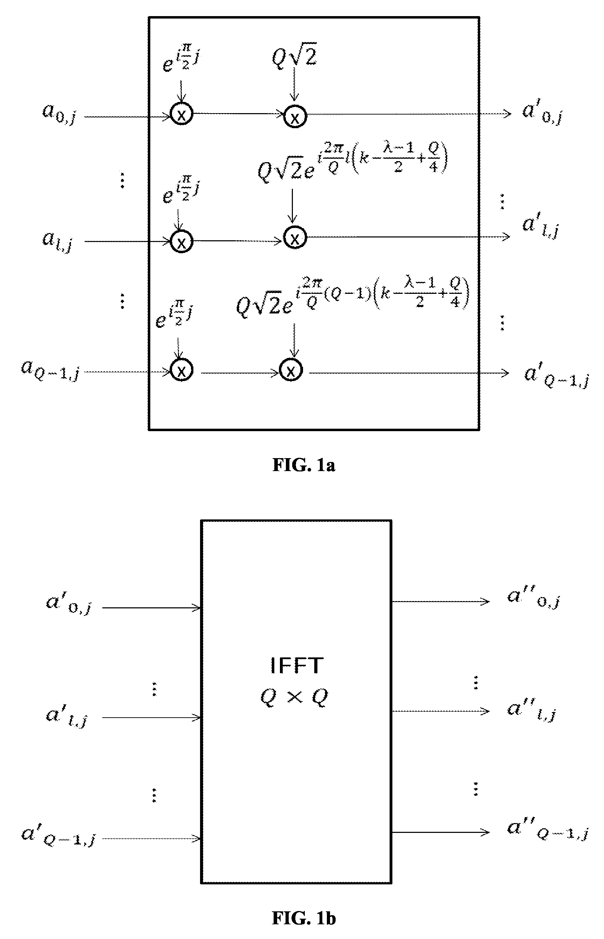

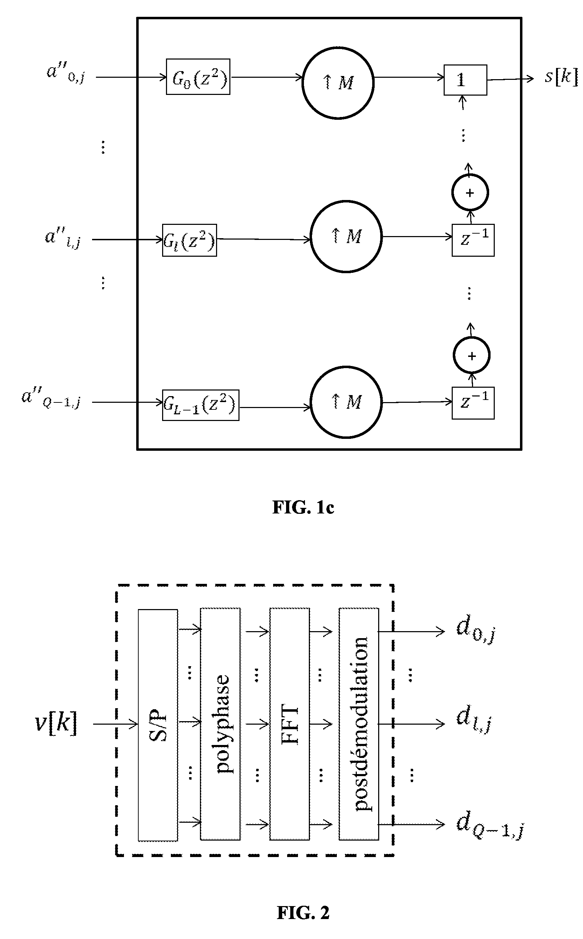

ce qui donne un vecteur $[a'_{0,j} \dots a'_{l,j} \dots a'_{Q-1,j}]^T$ (**figure 1a**),
- ce vecteur $[a'_{0,j} \dots a'_{l,j} \dots a'_{Q-1,j}]^T$ est soumis à une IFFT de dimension $Q \cdot Q$, ce qui donne un vecteur $[a''_{0,j} \dots a''_{l,j} \dots a''_{Q-1,j}]^T$ (**figure 1b**),
- chaque composante $a''_{l,j}$ de ce vecteur $[a''_{0,j} \dots a''_{l,j} \dots a''_{Q-1,j}]^T$ est soumise à un filtrage $G_l(z^2)$, puis à une expansion de facteur $Q/2$, et enfin (sauf pour $l = 0$) à un retard de facteur $z^{-1}$ par rapport à la composante $a''_{l-1,j}$ ; pour terminer, les signaux résultants sont sommés (transformation parallèle →série, notée P/S) pour donner le signal $s[k]$ (**figure 1c**).

La **figure 2** résume les étapes de modulation/émission d'un multiplex OFDM/OQAM décrites succinctement ci-dessus.

On peut appliquer un traitement analogue au signal reçu $v[k]$. Le signal démodulé $y_l[j]$ sortant sur la sous-porteuse numéro $l$ au temps-symbole numéro $j$ peut être écrit sous la forme

$$y_l[j] = \sum_{k=-\infty}^{+\infty} v[k]\, h_l\left[\frac{jQ}{2} - k\right], \text{ où} \qquad (9)$$

$$h_l[k] = \sqrt{2}\,p[k]\, e^{i\frac{2\pi}{Q}l\left(k-\frac{\lambda-1}{2}-\frac{Q}{4}\right)}, \qquad (10)$$

de manière à faire apparaître que le signal reçu $v[k]$ est filtré par un ensemble de $Q$ filtres $h_l\left[\frac{jQ}{2} - k\right]$ appartenant à une «banque de filtres d'analyse » $h_l[k]$.

Après quelques calculs, il apparaît que la réception/démodulation OFDM/OQAM consiste essentiellement à appliquer au signal reçu $v[k]$ durant chaque temps-symbole numéro $j$ les opérations suivantes :

- application d'un retard de facteur $z^\beta$, où $\beta$ est l'entier tel que

7

$$\beta \equiv \frac{\alpha Q}{2} - \lambda + 1 \text{ , avec } 0 \le \beta \le \frac{Q}{2} - 1 \text{ et } \alpha > 0 \text{ entier,} \qquad (11)$$

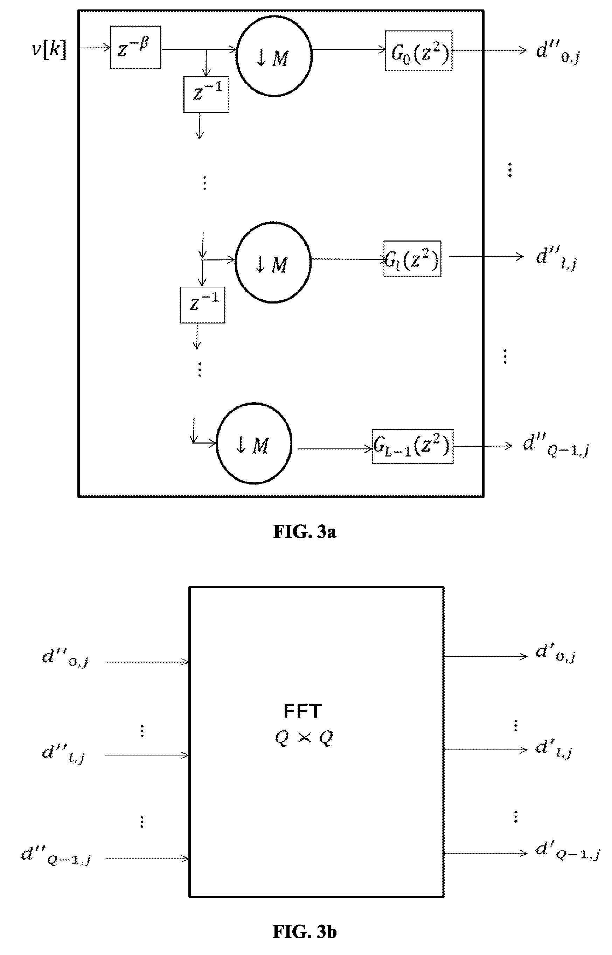

puis décomposition du signal ainsi obtenu en une somme de $Q$ composantes (transformation série → parallèle, notée S/P), chacune de ces composantes (sauf pour $I = 0$) étant d'abord soumise à un retard de facteur $z^{-1}$ par rapport à la composante précédente, puis décimée d'un facteur $Q/2$, et enfin soumise à un filtrage $G_l(z^2)$ pour donner la composante $d''_{l,j}$ d'un vecteur $[d''_{0,j} \dots d''_{l,j} \dots \text{d''}_{Q-1,j}]^T$ (**figure 3a**),

- ce vecteur $[d''_{0,j} \dots d''_{l,j} \dots \text{d''}_{Q-1,j}]^T$ est soumis à une FFT de dimension $Q \cdot Q$, ce qui donne un vecteur $[d'_{0,j} \dots d'_{l,j} \dots d'_{Q-1,j}]^T$ (**figure 3b**),
- chaque composante $d'_{l,j}$ de ce vecteur $[d'_{0,j} \dots d'_{l,j} \dots d'_{Q-1,j}]^T$ est multipliée par un facteur, dit de « postdémodulation », égal à

$$Q\sqrt{2}\,e^{i\frac{2\pi}{Q}l\left(k-\frac{\lambda-1}{2}+\frac{Q}{4}\right)}e^{-i\frac{\pi}{2}(j-\alpha)} ,$$

ce qui donne finalement la composante, réelle, $d_{l,j}$ du vecteur

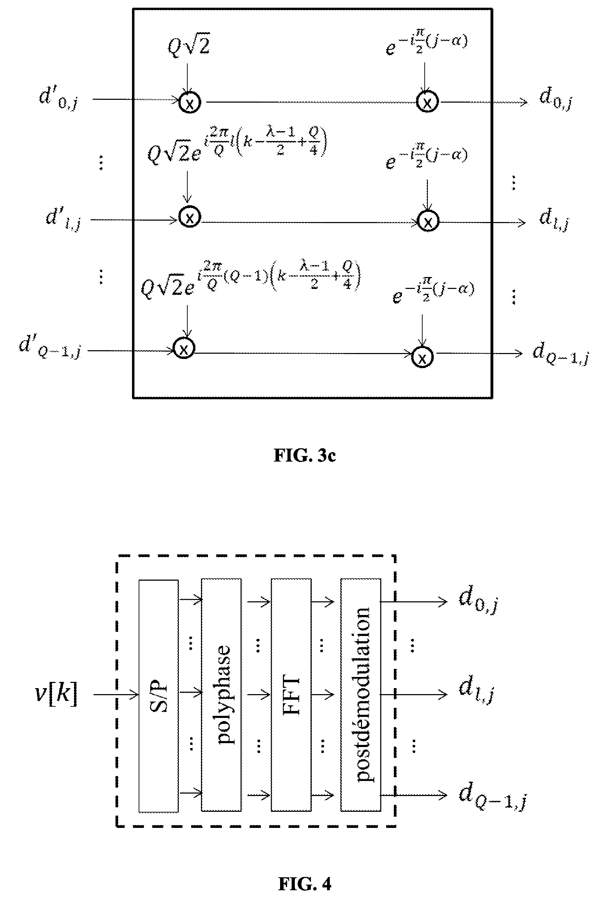

$$[d_{0,j} \quad \dots \quad d_{l,j} \quad \dots \quad d_{Q-1,j}]^T \text{ (\textbf{figure 3c})}.$$

La **figure 4** résume les étapes de réception/démodulation d'un multiplex OFDM/OQAM décrites succinctement ci-dessus.

On notera pour terminer, sur la base de l'équation (2) ci-dessus, que si l'on choisit systématiquement des valeurs nulles pour les symboles QAM correspondant à un numéro de sous-porteuse $I$ pair, alors il est inutile de prendre en compte les sous-porteuses de numéro pair, et si l'on choisit systématiquement des valeurs nulles pour les symboles QAM correspondant à un numéro de sous-porteuse $I$ impair, alors il est inutile de prendre en compte les sous-porteuses de numéro impair. Ainsi, dans ces deux cas, le nombre effectif de sous-porteuses est $Q/2$, lequel peut être pair ou impair. On voit donc que le nombre de sous-porteuses (désigné par $L$ dans le cadre de la présente invention) utilisé pour mettre en oeuvre une modulation OFDM/OQAM peut être aussi bien pair qu'impair.

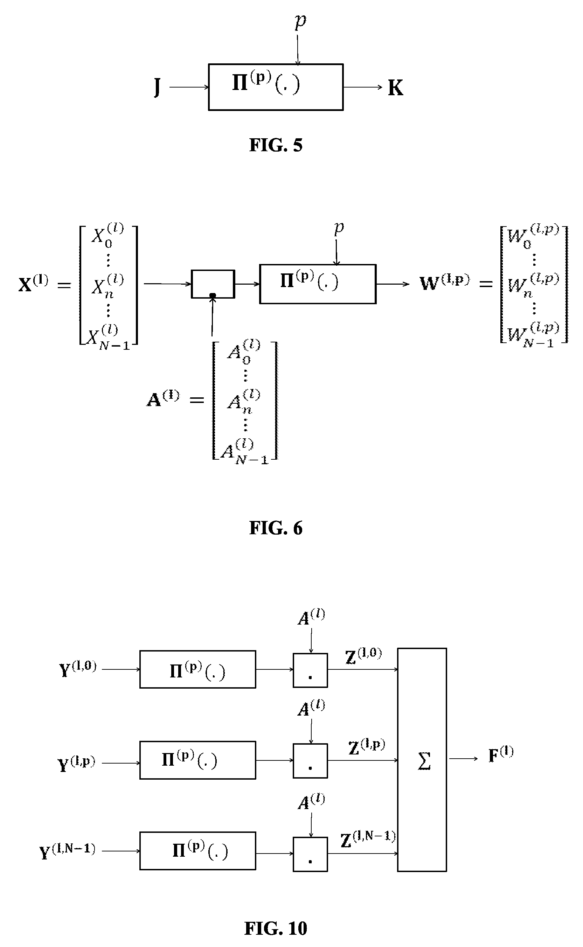

La **figure 5** représente schématiquement une permutation circulaire $\Pi^{(p)}$, où $p = 0,1, \dots, N - 1$, utilisée par l'invention. A tout vecteur source

$$\mathbf{J} = \begin{bmatrix} J_0 \\ \vdots \\ J_n \\ \vdots \\ J_{N-1} \end{bmatrix}$$

de longueur $N$, on associe par définition un vecteur cible

$$\mathbf{K} = \Pi^{(p)}(\mathbf{J}) = \begin{bmatrix} J_{f(0,p)} \\ \vdots \\ J_{f(n,p)} \\ \vdots \\ J_{f(N-1,p)} \end{bmatrix} ,$$

où $f$ est une « fonction de circulation » de la forme

$$f(n,p) = (n + r(p)) \bmod [N], \text{ où } r = p + c \text{ ou } r = -p + c, \qquad (12)$$

et où c est un entier relatif prédéterminé.

On va décrire à présent un procédé d'émission de données selon un mode de réalisation de l'invention, dans lequel on transmet des données codées sur chacune des $L$ sous-porteuses d'un multiplex OFDM/OQAM. En variante, on pourrait ne prendre en compte que l'une, ou un sous-ensemble, de ces sous-porteuses.

Dans ce mode de réalisation, l'émetteur met en oeuvre, pour chaque entier $l$, où $0 \leq l \leq L$ - 1, $N$ étapes successives (où $N$ est le nombre d'antennes de réception). Chaque étape de numéro $p$, où $p = 0,1, ... , N$ - 1, comprend les sous-étapes suivantes.

Lors d'une sous-étape E1_p, illustrée sur la **figure 6**, un vecteur de données $\mathbf{X}^{(l)}$ à $N$ composantes, associé à la sous-porteuse numéro $l$, est transformé en un « vecteur de données codé »

$$\mathbf{W}^{(\mathbf{l},\mathbf{p})} \equiv \begin{bmatrix} W_0^{(l,p)} \\ \vdots \\ W_n^{(l,p)} \\ \vdots \\ W_{N-1}^{(l,p)} \end{bmatrix} = \Pi^{(p)}\left(\mathbf{A}^{(\mathbf{l})}.\mathbf{X}^{(\mathbf{l})}\right) , \tag{13}$$

où $\mathbf{A}^{(l)}$ est un vecteur de codage prédéterminé à $N$ composantes non-nulles, et où la notation « $\mathbf{U.V}$ » désigne le résultat d'une multiplication terme à terme de deux vecteurs $\mathbf{U}$ et $\mathbf{V}$ de même longueur ; autrement dit, si les vecteurs $\mathbf{U}$ et $\mathbf{V}$ sont de longueur $\Lambda$, on définit :

$$\mathbf{U.V} \equiv \begin{bmatrix} U_0 V_0 \\ \vdots \\ U_n V_n \\ \vdots \\ U_{\Lambda-1} V_{\Lambda-1} \end{bmatrix}$$

Les composantes du vecteur codé sont donc égales à $W_n^{(l,p)} = A_{f(n,p)}^{(l)} X_{f(n,p)}^{(l)}$ , où $n \in [0, N$ - 1], et $f$ est la fonction de circulation définie ci-dessus.

Comme mentionné ci-dessus, on peut commodément choisir ce vecteur de codage $\mathbf{A}^{(l)}$ :

- soit de manière à ce que toutes ses composantes soient égales entre elles,
- soit, dans le cas où le nombre d'antennes de réception $N$ est pair, de manière à ce que ses composantes d'indices pairs soient égales entre elles, et ses composantes d'indices impairs soient égales entre elles et opposées aux composantes d'indices pairs.

D'autres choix sont naturellement possibles pour le vecteur de codage $\mathbf{A}^{(l)}$.

Lors d'une sous-étape E2_p, l'émetteur émet, sur chacune des $M$ antennes d'émission et sur la sous-porteuse numéro $l$, pour $0 \leq l \leq L$-1, du multiplex OFDM/OQAM, le vecteur de données codé $\mathbf{W}^{(l,p)}$, avec un précodage à Retournement Temporel à destination du récepteur.

On rappelle à cet égard qu'un signal radio émis par une antenne d'émission subit des déformations en fonction des conditions de propagation entre cette antenne d'émission et une antenne de réception. Afin de limiter ces déformations, le signal est préalablement distordu par application de coefficients dits de « précodage », en fonction des caractéristiques du canal de propagation entre ces deux antennes. Il est donc nécessaire, pour ce faire, de déterminer les caractéristiques de ce canal de propagation dans la bande de fréquences concernée.

Parmi les méthodes de précodage existantes, on distingue les méthodes mettant en oeuvre la technique dite du « Retournement Temporel », du fait de sa complexité réduite, de ses performances et de sa capacité intrinsèque à focaliser une onde radio sur une antenne de réception. Le Retournement Temporel permet de réduire significativement la dispersion causée par le canal de propagation en focalisant l'énergie du signal transmis dans le temps et dans l'espace.

Le Retournement Temporel est une technique (à l'origine utilisée dans le domaine des ondes acoustiques) qui repose sur l'invariance par renversement du temps de l'équation d'onde. Ainsi, une onde temporellement inversée se propage comme une onde directe qui remonterait le temps. Lorsqu'une impulsion brève émise par un point d'origine se propage dans un milieu de propagation, et qu'une partie de cette onde reçue par un point destinataire est retournée temporellement avant d'être renvoyée dans le milieu de propagation, l'onde converge vers le point d'origine en y reformant une impulsion brève. Le signal recueilli au point d'origine est quasi-identique dans sa forme au signal d'origine émis par le point d'origine.

La technique du Retournement Temporel a été appliquée aux réseaux de communication radio pour annuler l'effet du canal de propagation sur le signal reçu par une antenne réceptrice, notamment en réduisant l'étalement du canal par concentration de l'énergie en un point focal où se trouve cette antenne réceptrice et en réduisant l'étalement temporel (« *delay spread* » en anglais) du signal reçu, ainsi que pour simplifier le traitement de symboles reçus après la traversée du canal. Pour ce faire, le signal émis par une antenne émettrice est pré-égalisé par application de coefficients obtenus à partir du retournement temporel de la réponse impulsionnelle du canal de propagation que ce signal doit traverser.

En l'occurrence, il s'agit, d'une part, de focaliser la composante $W_n^{(l,p)}$, où $n \in [0, N-1]$, sur l'antenne de réception numéro *n,* et d'autre part de maximiser le débit de données entre l'émetteur et le récepteur, pour une puissance donnée de l'émetteur. L'émission est mise en oeuvre simultanément sur toutes les antennes émettrices.

Voici, à titre d'exemples, deux variantes possibles pour cette émission du vecteur de données codé $\mathbf{W}^{(\mathbf{l},\mathbf{p})}$ avec un précodage à Retournement Temporel.

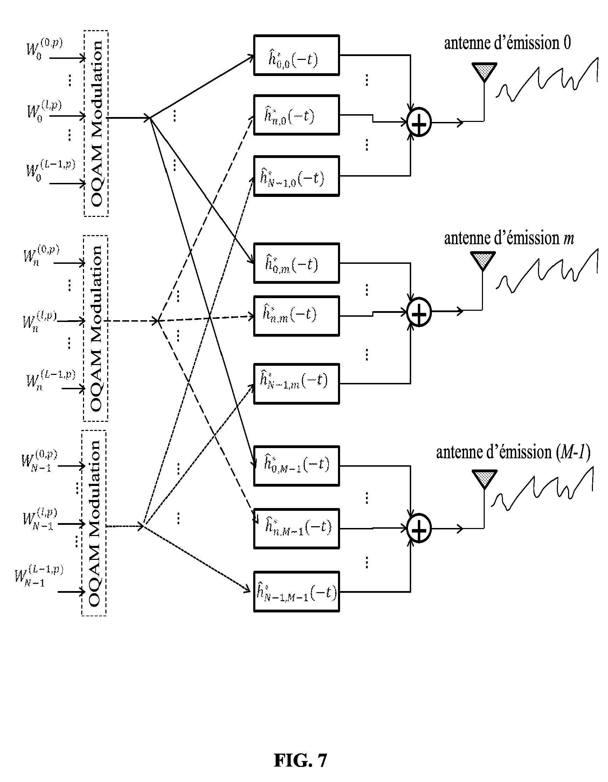

Selon une première variante, le précodage à Retournement Temporel est réalisé au moyen d'un filtre temporel. La **figure 7** illustre cette émission sur une sous-porteuse et sur l'ensemble des antennes d'émission.

Soit $h_{nm}(t)$ la réponse impulsionnelle du canal entre l'antenne d'émission numéro *m*, où $m \in [0, M-1]$, et l'antenne de réception numéro *n,* et soit $\hat{h}_{nm}(t)$ une estimation de $h_{nm}(t)$.

Le signal émis sur l'antenne d'émission numéro *m* est filtré au moyen du filtre à Retournement Temporel $\hat{h}_{nm}^{*}(-t)$.

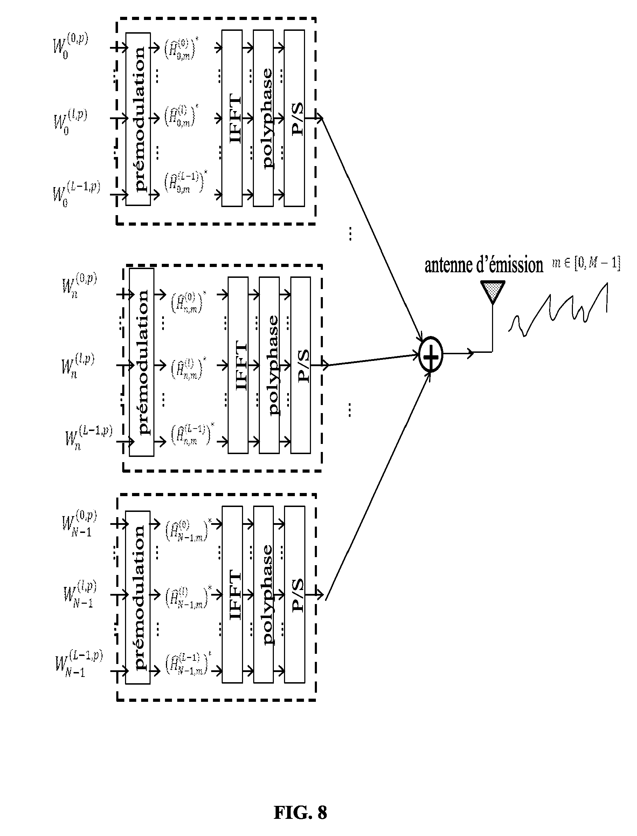

Selon une deuxième variante, le précodage à Retournement Temporel est réalisé au moyen d'un filtre fréquentiel. La **figure 8** illustre cette émission sur une antenne d'émission et sur l'ensemble des sous-porteuses.

Soit $H_{mn}^{(l)}$ le coefficient de la matrice de transfert du canal entre l'antenne d'émission numéro *m* et l'antenne de réception numéro *n* sur la sous-porteuse *l,* et soit $\hat{H}_{mn}^{(l)}$ une estimation de ce coefficient.

Le signal émis sur l'antenne d'émission numéro *m* sur la sous-porteuse *l* est filtré au moyen d'un coefficient de précodage à Retournement Temporel égal à $\left(\hat{H}_{mn}^{(l)}\right)^{*}$.

On va décrire à présent un procédé de réception de données selon un mode de réalisation de l'invention, dans lequel on obtient des données décodées associées à chacune des *L* sous-porteuses. En variante, on pourrait ne prendre en compte que l'une, ou un sous-ensemble, de ces sous-porteuses.

Le récepteur met tout d'abord en oeuvre *N* étapes (où *N* est le nombre d'antennes de réception). On suppose ici que l'émetteur et le récepteur sont synchronisés au moyen d'une technique classique, de manière à ce que les temps-symboles appliqués par l'émetteur et le récepteur soient égaux, et que lesdites *N* étapes soient mises en oeuvre parallèlement au niveau de l'émetteur et au niveau du récepteur.

Chaque étape de numéro *p*, où $p = 0,1, ...,N-1$, comprend les sous-étapes suivantes.

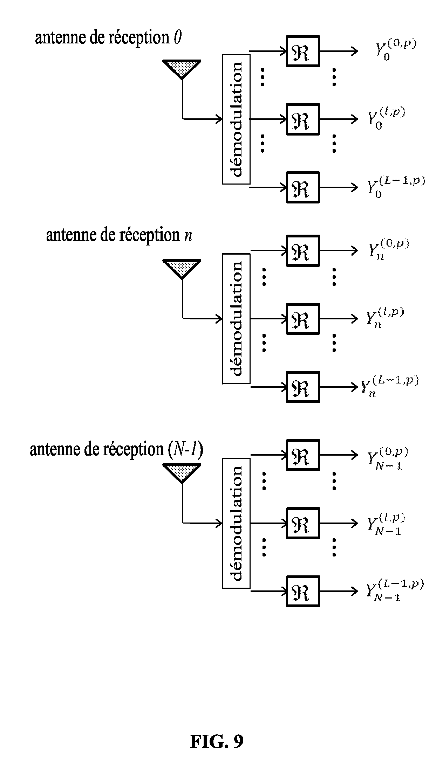

Lors d'une sous-étape R1_p, illustrée sur la **figure 9**, le récepteur détermine, pour chaque sous-porteuse *l*, où $0 \leq l \leq L-1$, un « vecteur reçu » $\mathbf{Y}^{(\mathbf{l},\mathbf{p})}$ à *N* composantes réelles, dont la *n*-ième composante, où $n = 1,2, ...,N$, est égale au symbole associé à la sous-porteuse *l* reçu sur la *n*-ième antenne de réception, après démodulation OFDM/OQAM et extraction de la partie réelle.

Lors d'une sous-étape R2_p, illustrée sur la **figure 10**, le récepteur code chacun desdits vecteurs reçus $\mathbf{Y}^{(\mathbf{l},\mathbf{p})}$, de manière à obtenir un « vecteur reçu codé »

$$\mathbf{Z}^{(\mathbf{l},\mathbf{p})} = \begin{bmatrix} Z_0^{(l,p)} \\ \vdots \\ Z_n^{(l,p)} \\ \vdots \\ Z_{N-1}^{(l,p)} \end{bmatrix} = \mathbf{A}^{(\mathbf{l})} \cdot \left( \mathbf{\Pi}^{(\mathbf{p})}(\mathbf{Y}^{(\mathbf{l},\mathbf{p})}) \right). \qquad (14)$$

Autrement dit :

$$Z_n^{(l,p)} = A_n^{(l)} Y_{f(n,p)}^{(l)},$$

où $n \in [0, N-1]$, *f* est la fonction de circulation définie ci-dessus, et $\mathbf{A}^{(\mathbf{l})}$ est le vecteur de codage mentionné ci-dessus.

Une fois que ces N étapes sont achevées, le récepteur calcule, pour $0 \leq l \leq L-1$, lors d'une étape R3, le « vecteur décodable » $\mathbf{F}^{(\mathbf{l})}$ par sommation sur les différentes antennes de réception des vecteurs reçus codés

correspondants :

$$\mathbf{F}^{(l)} = \sum_{\mathbf{p=0}}^{\mathbf{N-1}} \mathbf{Z}^{(l,p)} , \qquad (15)$$

comme illustré également sur la figure 10. Autrement dit :

$$Z_n^{(l,p)} = A_n^{(l)} Y_{f(n,p)}^{(l)} ,$$

où $n \in [0, N - 1]$.

Enfin, lors d'une étape R4, le récepteur calcule, pour $0 \le l \le L\text{-}1$, le « vecteur de données décodées » :

$$\mathbf{T}^{(l)} = \mathbf{S}^{(l)} \cdot \mathbf{F}^{(l)} , \qquad (16)$$

où la matrice de décodage

$$\mathbf{S}^{(l)} = \left(\mathbf{R}^{(l)}\right)^{-1} \qquad (17)$$

est obtenue par inversion de la matrice $\mathbf{R}^{(l)}$ du canal équivalent entre l'émetteur et le récepteur. Par définition, on entend par « matrice du canal équivalent » la matrice $\mathbf{R}^{(l)}$ telle que :

$$\mathbf{F}^{(l)} = \mathbf{R}^{(l)} \cdot \mathbf{X}^{(l)} + \mathbf{B}^{(l)}, \qquad (18)$$

où $\mathbf{B}^{(l)}$ est un terme de bruit thermique.

On peut montrer en effet que cette matrice $\mathbf{R}^{(l)}$ est toujours inversible. L'inversion de la matrice $\mathbf{R}^{(l)}$ est bien sûr particulièrement aisée lorsque $\mathbf{R}^{(l)}$ est diagonalisable, en particulier lorsque $\mathbf{R}^{(l)}$ est une matrice circulante. Or on peut montrer que l'on obtient justement une matrice circulante dans les deux cas pratiques suivants :

- soit le vecteur de codage $\mathbf{A}^{(l)}$ est tel que toutes ses composantes soient égales entre elles,
- soit, dans le cas où le nombre d'antennes de réception $N$ est pair, le vecteur de codage $\mathbf{A}^{(l)}$ est tel que ses composantes d'indices pairs soient égales entre elles, et ses composantes d'indices impairs soient égales entre elles et opposées aux composantes d'indices pairs.

On peut aussi montrer que (théoriquement) le vecteur de données décodées $\mathbf{T}^{(l)}$ ainsi obtenu est égal au vecteur de données $\mathbf{X}^{(l)}$ émis, sans aucune interférence entre les symboles décodés.

On va décrire pour terminer, à titre d'exemples, deux méthodes pour estimer la matrice $\mathbf{R}^{(l)}$.

Selon une première variante, l'estimation de $\mathbf{R}^{(l)}$ est obtenue par calcul.

Cette méthode par calcul nécessite que le récepteur connaisse une estimation $\hat{\mathsf{H}}^{(l)}$ de la matrice de transfert du canal MIMO pour la sous-porteuse $l$. Cette estimation peut être obtenue par tout moyen classique.

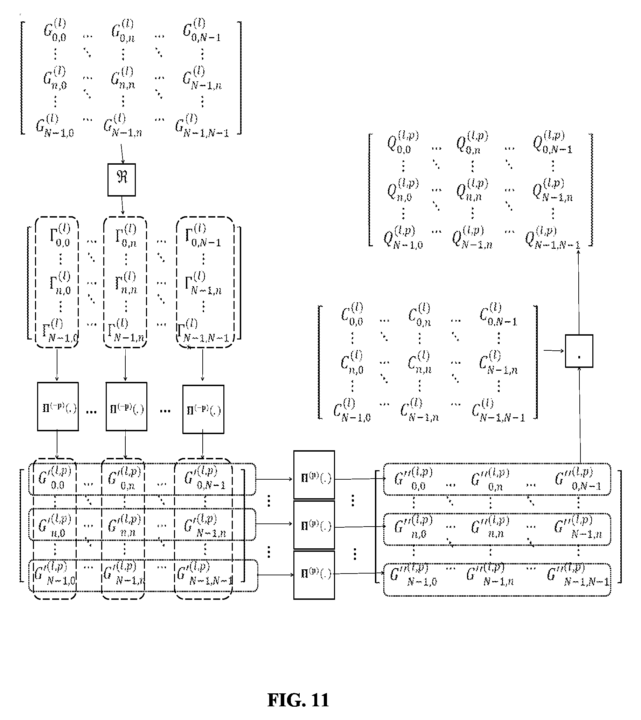

Comme illustré sur la **figure 11**, le récepteur effectue les étapes suivantes :

○ calcul de la matrice $\mathbf{G}^{(l)} = \hat{\mathsf{H}}^{(l)} \cdot (\hat{\mathsf{H}}^{(l)})^{\mathbf{H}}$, où l'exposant H désigne la transposée conjuguée,
○ calcul de la matrice $\Gamma^{(l)} = \Re\{\mathbf{G}^{(l)}\}$,
○ calcul de la matrice $\mathbf{C}^{(l)} = \mathbf{A}^{(l)}(\mathbf{A}^{(l)})^{\mathbf{T}}$,
○ $N$ étapes successives d'indice $p$ de 0 à $(N - 1)$, chaque étape comprenant :

■ une étape de calcul d'une matrice $\mathbf{G'}^{(l,p)}$ dont le $n$-ième vecteur colonne est obtenu en appliquant $\Pi^{(-\mathbf{p})}(.)$ au $n$-ième vecteur colonne de $\Gamma^{(l)}$,
■ une étape de calcul d'une matrice $\mathbf{G''}^{(l,p)}$ dont le $n$-ième vecteur ligne est obtenu en appliquant $\Pi^{(\mathbf{p})}(.)$ au $n$-ième vecteur ligne de $\mathbf{G'}^{(l,p)}$, et
■ calcul de la matrice $\mathbf{Q}^{(l,p)} = \mathbf{C}^{(l)} \cdot \mathbf{G''}^{(l,p)}$.

Pour tout $p \in [0, N - 1]$, la matrice $\mathbf{Q}^{(l,p)}$ ainsi obtenue a pour composantes :

$$Q_{nm}^{(l,p)} = A_n^{(l)} A_m^{(l)} \Re\left\{ G_{f(n,p)f(m,-p)}^{(l)} \right\}, \text{ où } n \in [0, N-1] \text{ et } m \in [0, N-1]$$

On obtient alors finalement :

$$\mathbf{R}^{(\mathbf{l})} = \sum_{\mathbf{p}=\mathbf{0}}^{\mathbf{N}-\mathbf{1}} \mathbf{Q}^{(\mathbf{l},\mathbf{p})}$$

Selon une deuxième variante, l'estimation de $\mathbf{R}^{(\mathbf{l})}$ est obtenue par des mesures réalisées à l'aide de signaux pilotes.

Cette méthode nécessite une étape préalable d'émission/réception de pilotes codés. L'avantage de cette méthode est que le récepteur n'a pas à estimer la matrice de transfert $\mathbf{H}$ en OQAM (opération complexe), et n'a pas besoin de calculer la matrice $\mathbf{R}^{(\mathbf{l})}$, qui est ici mesurée directement par le récepteur.

L'émetteur et le récepteur mettent en oeuvre les étapes suivantes pour q allant de 0 à ($N$ - 1).

L'émetteur traite, pour chaque sous-porteuse $l$, où $0 \leq l \leq L$ - 1, un vecteur de données $\mathbf{Xpilote}^{(\mathbf{q},\mathbf{l})}$ réel et connu par le récepteur, de taille $N \geq 2$, dont toutes les composantes sont nulles à l'exception de $\mathbf{Xpilote}^{(\mathbf{q},\mathbf{l})}(\mathbf{q})$, suivant $N$ étapes successives d'indice $p$ de 0 à ($N$ - 1), chaque étape $p$ comprenant :

- une étape de codage du vecteur de données $\mathbf{Xpilote}^{(\mathbf{q},\mathbf{l})}$ en un vecteur codé $\mathbf{Wpilote}^{(\mathbf{q},\mathbf{l},\mathbf{p})} = \Pi^{(\mathbf{p})}(\mathbf{A}^{(\mathbf{l})}.\mathbf{X}^{(\mathbf{q},\mathbf{l})})$, et
- une étape d'émission du vecteur codé $\mathbf{Wpilote}^{(\mathbf{q},\mathbf{l},\mathbf{p})}$ à destination du récepteur, avec un précodage à Retournement Temporel de manière à focaliser le $n$-ième élément de $\mathbf{Wpilote}^{(\mathbf{q},\mathbf{l},\mathbf{p})}$ sur la $n$-ième antenne de réception.

Le récepteur met en oeuvre, pour chaque sous-porteuse $l$, où $0 \leq l \leq L$ - 1, les étapes suivantes :

- $N$ étapes successives d'indice $p$ de 0 à ($N$ - 1), chaque étape $p$ comprenant :

  ○ une étape de détermination d'un vecteur reçu $\mathbf{Y}^{(\mathbf{q},\mathbf{l},\mathbf{p})}$ composé des symboles reçus sur les $N$ antennes de réception, après démodulation OQAM et extraction de la partie réelle, et
  o une étape de codage du vecteur reçu $\mathbf{Y}^{(\mathbf{q},\mathbf{l},\mathbf{p})}$ en un vecteur reçu codé $\mathbf{Z}^{(\mathbf{q},\mathbf{l},\mathbf{p})} = \mathbf{A}^{(\mathbf{l})}. (\Pi^{(\mathbf{p})} (\mathbf{Y}^{(\mathbf{q},\mathbf{l},\mathbf{p})}))$, et

- une étape de calcul d'un vecteur décodable

$$\mathbf{Fpilote}^{(\mathbf{q},\mathbf{l})} = \sum_{\mathbf{p}=\mathbf{0}}^{\mathbf{N}-\mathbf{1}} \mathbf{Z}^{(\mathbf{q},\mathbf{l},\mathbf{p})}$$

Enfin, le récepteur calcule les composantes de la matrice $\mathbf{R}^{(\mathbf{l})}$ du canal équivalent de la manière suivante :

$$R^{(l)}(n,q) = Fpilote^{(q,l)}(n)/Xpilote^{(q,l)}(n),$$

pour $0 \leq n \leq N$ -1 et $0 \leq q \leq N$ - 1.

On notera que lorsque $\mathbf{R}^{(\mathbf{l})}$ est une matrice circulante, il suffit de traiter $\mathbf{Xpilote}^{(\mathbf{q},\mathbf{l})}$ pour $q$ = 0 comme décrit ci-dessus ; il n'est pas nécessaire de traiter $\mathbf{Xpilote}^{(\mathbf{q},\mathbf{l})}$ pour $1 \leq q \leq N$ - 1, car les colonnes de $\mathbf{R}^{(\mathbf{l})}$ se déduisent les unes des autres par circulation.

Comme mentionné ci-dessus, la présente invention concerne également un système informatique mettant en oeuvre le procédé d'émission sans-fil, ou le procédé de réception sans-fil, ou le procédé de communication sans-fil décrits ci-dessus. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en oeuvre de l'un quelconque des procédés selon l'invention.

En effet, l'invention vise aussi un programme d'ordinateur téléchargeable depuis un réseau de communication comprenant des instructions pour l'exécution des étapes d'un procédé selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations, inamovible, ou partiellement ou totalement amovible, lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comprendre un moyen de stockage, tel qu'une ROM, par exemple un CD ROM ou une ROM de circuit microélectronique, ou un moyen d'enregistrement magnétique, tel qu'un disque dur, ou encore une clé USB (« *USB flash drive* » en anglais).

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme est incorporé, le circuit étant adapté pour exécuter ou pour être utilisé dans l'exécution de l'un quelconque des procédés selon l'invention.

**Revendications**

1.   Procédé d'émission sans-fil, par un émetteur muni de $M \geq 1$ antenne(s) d'émission, de données destinées à un récepteur muni de $N \geq 2$ antennes de réception, dans lequel lesdites données sont transmises au moyen d'une modulation OFDM/OQAM comprenant $L \geq 1$ sous-porteuses, **caractérisé en ce que**, pour au moins une valeur de l'entier *l,* où $0 \leq l \leq L$ -1, ledit émetteur met en oeuvre $N$ étapes, l'étape de numéro $p$, où $p = 0,1, ..., N - 1$, comprenant les sous-étapes suivantes :

     - codage, E1_p, d'un vecteur de données $\mathbf{X^{(l)}}$ à $N$ composantes réelles en un vecteur de données codé $\mathbf{W^{(l,p)}}$ $= \Pi^{(p)}(\mathbf{A^{(l)}}.\mathbf{X^{(l)}})$, où $A^{(l)}$ est un vecteur de codage prédéterminé à $N$ composantes non-nulles, la notation « $\mathbf{U.V}$ » désigne le résultat de la multiplication terme à terme de deux vecteurs $\mathbf{U}$ et $\mathbf{V}$ de même longueur, et $\Pi^{(p)}(\mathbf{U})$ désigne la permutation circulaire de $r$ crans des composantes d'un vecteur $\mathbf{U}$, où $r = p + c$ ou $r = -p + c$, et $c$ est un entier relatif prédéterminé, et

     - émission, E2_p, dudit vecteur de données codé $\mathbf{W^{(l,p)}}$ sur chacune des $M$ antennes d'émission sur la sous-porteuse *l*, avec un précodage à Retournement Temporel utilisant une estimation $\hat{\mathbf{H}}^{(l)}$ de la matrice de transfert du canal MIMO qui relie ledit émetteur audit récepteur pour la sous-porteuse *l* et focalisant la $n$-ième composante du vecteur de données codé $\mathbf{W^{(l,p)}}$, où $n = 1,2, ...,N$, sur la n-ième antenne de réception.

2.   Procédé d'émission sans-fil selon la revendication 1, **caractérisé en ce que** ledit vecteur de codage $\mathbf{A^{(l)}}$ est tel que toutes ses composantes soient égales entre elles.

3.   Procédé d'émission sans-fil selon la revendication 1, **caractérisé en ce que** le nombre d'antennes de réception $N$ est pair, et **en ce que** ledit vecteur de codage $\mathbf{A^{(l)}}$ est tel que ses composantes d'indices pairs soient égales entre elles, et ses composantes d'indices impairs soient égales entre elles et opposées aux composantes d'indices pairs.

4.   Procédé de réception sans-fil par un récepteur muni de $N \geq 2$ antennes de réception, dans lequel les données reçues ont été transmises au moyen d'une modulation OFDM/OQAM comprenant $L \geq 1$ sous-porteuses, **caractérisé en ce que**, pour au moins une valeur de l'entier *l*, où $0 \leq l \leq L$-1:

     a) ledit récepteur met tout d'abord en oeuvre $N$ étapes, l'étape de numéro $p$, où $p = 0,1, ..., N - 1$, comprenant les sous-étapes suivantes :

          - détermination , R1_p, d'un vecteur reçu $\mathbf{Y^{(l,p)}}$ à $N$ composantes réelles, dont la $n$-ième composante, où $n = 1,2, ...,N$, est égale au symbole associé à la sous-porteuse *l* reçu sur la $n$-ième antenne de réception, après démodulation OFDM/OQAM et extraction de la partie réelle, et
          - codage, R2_p, dudit vecteur reçu $\mathbf{Y^{(l,p)}}$ en un vecteur reçu codé

$$\mathbf{Z^{(l,p)}} = \mathbf{A^{(l)}}.\left(\mathbf{\Pi^{(p)}}(\mathbf{Y^{(l,p)}})\right),$$

          où $\mathbf{A^{(l)}}$ est un vecteur de codage prédéterminé à $N$ composantes non-nulles, la notation « $\mathbf{U.V}$ » désigne le résultat de la multiplication terme à terme de deux vecteurs $\mathbf{U}$ et $\mathbf{V}$ de même longueur, $\Pi^{(p)}(\mathbf{U})$ désigne la permutation circulaire de $r$ crans des composantes d'un vecteur $\mathbf{U}$, où $r = p + c$ ou $r = -p + c$, et $c$ est un entier relatif prédéterminé,

b) le récepteur calcule, R3, un vecteur décodable

$$\mathbf{F^{(l)}} = \sum_{p=0}^{N-1} \mathbf{Z^{(l,p)}} \, ,$$

et

c) le récepteur calcule, R4, un vecteur de données décodées $\mathbf{T^{(l)}}$ comme suit :

$$\mathbf{T^{(l)}} = \mathbf{S^{(l)}} \cdot \mathbf{F^{(l)}},$$

où $\mathbf{S^{(l)}} = (\mathbf{R^{(l)}})^{-1}$ et $\mathbf{R^{(l)}}$ est la matrice du canal MIMO équivalent entre l'émetteur et le récepteur pour la sous-porteuse *l*, définie par

$$\mathbf{F^{(l)}} = \mathbf{R^{(l)}} \cdot \mathbf{X^{(l)}} + \mathbf{B^{(l)}},$$

où $\mathbf{B^{(l)}}$ est un terme de bruit thermique.

**5.** Procédé de réception sans-fil selon la revendication 4, **caractérisé en ce que** ledit vecteur de codage $\mathbf{A^{(l)}}$ est tel que toutes ses composantes soient égales entre elles.

**6.** Procédé de réception sans-fil selon la revendication 4, **caractérisé en ce que** le nombre d'antennes de réception *N* est pair, et **en ce que** ledit vecteur de codage $\mathbf{A^{(l)}}$ est tel que ses composantes d'indices pairs soient égales entre elles, et ses composantes d'indices impairs soient égales entre elles et opposées aux composantes d'indices pairs.

**7.** Procédé de communication sans-fil, **caractérisé en ce qu'**il comprend les étapes d'un procédé d'émission selon la revendication 1, et les étapes d'un procédé de réception selon la revendication 4, et **en ce que** lesdites étapes de numéro *p*, où *p* = 0,1, ..., *N* - 1, sont synchronisées entre l'émetteur et le récepteur.

**8.** Emetteur sans-fil muni de $M \geq 1$ antenne(s) d'émission, comprenant des moyens pour transmettre des données destinées à un récepteur muni de $N \geq 2$ antennes de réception au moyen d'une modulation OFDM/OQAM comprenant $L \geq 1$ sous-porteuses, **caractérisé en ce que**, pour au moins une valeur de l'entier *l*, où $0 \leq l \leq L$ -1, ledit émetteur comprend en outre des moyens pour :

- coder, pour *p* = 0,1, ..., *N* - 1, un vecteur de données $\mathbf{X^{(l)}}$ à *N* composantes réelles en un vecteur de données codé $\mathbf{W^{(l,p)}} = \Pi^{(p)}(\mathbf{A^{(l)}}.\mathbf{X^{(l)}})$, où $\mathbf{A^{(l)}}$ est un vecteur de codage prédéterminé à *N* composantes non-nulles, la notation « **U.V** » désigne le résultat de la multiplication terme à terme de deux vecteurs **U** et **V** de même longueur, et $\Pi^{(p)}(\mathbf{U})$ désigne la permutation circulaire de *r* crans des composantes d'un vecteur **U**, où *r* = *p* + *c* ou *r* = -*p* + *c*, et *c* est un entier relatif prédéterminé, et
- émettre, pour *p* = 0,1, ..., *N* -1, ledit vecteur de données codé $\mathbf{W^{(l,p)}}$ sur chacune des *M* antennes d'émission sur la sous-porteuse *l*, avec un précodage à Retournement Temporel utilisant une estimation $\hat{H}^{(l)}$ de la matrice de transfert du canal MIMO qui relie ledit émetteur audit récepteur pour la sous-porteuse *l* et focalisant la *n*-ième composante du vecteur de données codé $\mathbf{W^{(l,p)}}$, où *n* = 1,2, ...,*N*, sur la *n*-ième antenne de réception.

**9.** Récepteur sans-fil muni de $N \geq 2$ antennes de réception, comprenant des moyens pour recevoir des données qui ont été transmises au moyen d'une modulation OFDM/OQAM comprenant $L \geq 1$ sous-porteuses, **caractérisé en ce que**, pour au moins une valeur de l'entier *l*, où $0 \leq l \leq L$ - 1, il comprend en outre des moyens pour :

- déterminer, pour *p* = 0,1, ...,*N* - 1, un vecteur reçu $\mathbf{Y^{(l,p)}}$ à *N* composantes réelles, dont la *n*-ième composante, où *n* = 1,2, ..., *N*, est égale au symbole associé à la sous-porteuse *l* reçu sur la *n*-ième antenne de réception, après démodulation OFDM/OQAM et extraction de la partie réelle,
- coder, pour *p* = 0,1, ..., *N* - 1, ledit vecteur reçu $\mathbf{Y^{(l,p)}}$ en un vecteur reçu codé

$$\mathbf{Z^{(l,p)}} = \mathbf{A^{(l)}}.\left( \mathbf{\Pi^{(p)}}(\mathbf{Y^{(l,p)}}) \right),$$

où $\mathbf{A}^{(l)}$ est un vecteur de codage prédéterminé à *N* composantes non-nulles, la notation « **U.V** » désigne le résultat de la multiplication terme à terme de deux vecteurs **U** et **V** de même longueur, $\Pi^{(p)}(\mathbf{U})$ désigne la permutation circulaire de *r* crans des composantes d'un vecteur **U**, où *r* = *p* + *c* ou *r* = -*p* + *c,* et *c* est un entier relatif prédéterminé,

- calculer un vecteur décodable

$$\mathbf{F}^{(l)} = \sum_{p=0}^{N-1} \mathbf{Z}^{(l,p)} \ ,$$

et
- calculer un vecteur de données décodées $\mathbf{T}^{(l)}$ comme suit :

$$\mathbf{T}^{(l)} = \mathbf{S}^{(l)} \cdot \mathbf{F}^{(l)},$$

où $\mathbf{S}^{(l)} = (\mathbf{R}^{(l)})^{-1}$ et $\mathbf{R}^{(l)}$ est la matrice du canal MIMO équivalent entre l'émetteur et le récepteur pour la sous-porteuse *l*, définie par

$$\mathbf{F}^{(l)} = \mathbf{R}^{(l)} \cdot \mathbf{X}^{(l)} + \mathbf{B}^{(l)},$$

où $\mathbf{B}^{(l)}$ est un terme de bruit thermique.

**10.** Système de communication sans-fil comprenant un émetteur sans-fil selon la revendication 8 et un récepteur sans-fil selon la revendication 9, ledit émetteur et ledit récepteur étant aptes à se synchroniser mutuellement.

**11.** Moyen de stockage de données inamovible, ou partiellement ou totalement amovible, comportant des instructions de code de programme informatique pour l'exécution des étapes d'un procédé d'émission sans-fil selon la revendication 1, ou d'un procédé de réception sans-fil selon la revendication 4, ou d'un procédé de communication sans-fil selon la revendication 7.

**12.** Programme d'ordinateur téléchargeable depuis un réseau de communication et/ou stocké sur un support lisible par ordinateur et/ou exécutable par un microprocesseur, **caractérisé en ce qu'**il comprend des instructions pour l'exécution des étapes d'un procédé d'émission sans-fil selon la revendication 1, ou d'un procédé de réception sans-fil selon la revendication 4, ou d'un procédé de communication sans-fil selon la revendication 7.

**Patentansprüche**

**1.** Verfahren zum drahtlosen Senden, durch einen mit M ≥ 1 Sendeanteantennen versehenen Emitter, von Daten, die für einen mit N ≥ 2 Empfangsantennen versehenen Empfänger bestimmt sind, wobei die Daten mittels einer L ≥ 1 Unterträger enthaltenden OFDM/OQAM-Modulation übertragen werden, **dadurch gekennzeichnet, dass** für mindestens einen Wert der ganzen Zahl l, wobei gilt 0 ≤ l ≥ L - 1, der Emitter N Schritte ausführt, wobei der Schritt der Nummer p, wobei gilt p = 0, 1, ..., N-1, die folgenden Teilschritte enthält:

- Codierung, E1_p, eines Datenvektors $X^{(L)}$ mit N realen Komponenten in einen codierten Datenvektor $W^{(L,p)}$ = $\Pi^{(p)}$ ($A^{(L)}$ . $X^{(L)}$), wobei $A^{(L)}$ ein vorbestimmter Codiervektor mit N Komponenten ungleich Null ist, die Bezeichnung « U.V » das Ergebnis der Multiplikation Term für Term von zwei Vektoren U und V gleicher Länge bezeichnet, und $\Pi^{(p)}$ (U) die zirkuläre Permutation von r Stufen der Komponenten eines Vektors U bezeichnet, wobei gilt r = p + c oder r = -p + c, und c eine vorbestimmte relative ganze Zahl ist, und
- Senden ,E2_p, des codierten Datenvektors $W^{(L,p)}$ auf jeder der M Sendeantennen auf dem Unterträger l, mit einer Vorcodierung mit Zeitumkehr unter Verwendung einer Schätzung $\hat{H}^{(L)}$ der Transfermatrix des MIMO-Kanals, der den Emitter mit dem Empfänger für den Unterträger 1 verbindet, und unter Fokussierung der n-ten Komponente des codierten Datenvektors $W^{(L,p)}$, wobei gilt n = 1, 2, ..., N, auf die n-te Empfangsantenne.

**2.** Drahtloses Sendeverfahren nach Anspruch 1, **dadurch gekennzeichnet, dass** der Codiervektor $A^{(L)}$ so ist, dass alle seine Komponenten untereinander gleich sind.

3. Drahtloses Sendeverfahren nach Anspruch 1, **dadurch gekennzeichnet, dass** die Anzahl von Empfangsantennen N gerade ist, und dass der Codiervektor $A^{(L)}$ so ist, dass seine Komponenten mit geraden Indices untereinander gleich sind, und seine Komponenten mit ungeraden Indices untereinander gleich und den Komponenten mit geraden Indices entgegengesetzt sind.

4. Verfahren zum drahtlosen Empfang durch einen mit N ≥ 2 Empfangsantennen versehenen Empfänger, wobei die empfangenen Daten mittels einer L ≥ 1 Unterträger enthaltenden OFDM/OQAM-Modulation übertragen wurden, **dadurch gekennzeichnet, dass** für mindestens einen Wert der ganzen Zahl l, wobei gilt 0 ≤ 1 ≤ L-1:

a) der Empfänger zunächst N Schritte ausführt, wobei der Schritt mit der Nummer p, wobei gilt p = 0, 1, ..., N-1, die folgenden Teilschritte enthält:

- Bestimmung ,R1_p, eines empfangenen Vektors $Y^{(L,p)}$ mit N realen Komponenten, dessen n-te Komponente, wobei gilt n = 1, 2, ..., N, gleich dem dem Unterträger 1 zugeordneten Symbol ist, das auf der n-ten Empfangsantenne empfangen wird, nach OFDM/OQAM-Demodulation und Extraktion des realen Teils, und
- Codierung R2_p, des empfangenen Vektors $Y^{(L,p)}$ in einen codierten empfangenen Vektor $Z^{(L,p)} = A^{(L)} \cdot (\Pi^{(p)} (Y^{(L,p)}))$,
wobei $A^{(L)}$ ein vorbestimmter Codiervektor mit N Komponenten ungleich Null ist, die Bezeichnung « U.V » das Ergebnis der Multiplikation Term für Term von zwei Vektoren U und V gleicher Länge bezeichnet, $\Pi^{(p)}(U)$ die zirkuläre Permutation von r Stufen der Komponenten eines Vektors U bezeichnet, wobei gilt r = p + c oder r = -p + c, und c eine vorbestimmte relative ganze Zahl ist,

b) der Empfänger einen decodierbaren Vektor $\Re$ berechnet R3, und
c) der Empfänger einen Vektor decodierter Daten $T^{(L)}$ folgendermaßen berechnet ,R4,:

$$T^{(L)} = S^{(L)} \times F^{(L)},$$

wobei gilt $S^{(L)} = (R^{(L)})^{-1}$ und $R^{(L)}$ die Matrix des äquivalenten MIMO-Kanals zwischen dem Emitter und dem Empfänger für den Unterträger 1 ist, definiert durch

$$F^{(L)} = R^{(L)} \times X^{(L)} + B^{(L)},$$

wobei $B^{(L)}$ ein Term des thermischen Rauschens ist.

5. Drahtloses Empfangsverfahren nach Anspruch 4, **dadurch gekennzeichnet, dass** der Codiervektor $A^{(L)}$ so ist, dass alle seine Komponenten untereinander gleich sind.

6. Drahtloses Empfangsverfahren nach Anspruch 4, **dadurch gekennzeichnet, dass** die Anzahl von Empfangsantennen N gerade ist, und dass der Codiervektor $A^{(L)}$ so ist, dass alle seine Komponenten mit geraden Indices untereinander gleich sind, und seine Komponenten mit ungeraden Indices untereinander gleich und den Komponenten mit geraden Indices entgegengesetzt sind.

7. Drahtloses Kommunikationsverfahren, **dadurch gekennzeichnet, dass** es die Schritte eines Sendeverfahrens nach Anspruch 1 und die Schritte eines Empfangsverfahrens nach Anspruch 4 enthält, und dass die Schritte der Nummer p, wobei gilt p = 0, 1, ..., N-1, zwischen dem Emitter und dem Empfänger synchronisiert sind.

8. Drahtloser Emitter, der mit M ≥ 1 Sendeantennen versehen ist, der Einrichtungen enthält, um für einen mit N ≥ 2 Empfangsantennen versehenen Empfänger bestimmte Daten mittels einer L ≥ 1 Unterträger enthaltenden OFDM/OQAM-Modulation zu übertragen, **dadurch gekennzeichnet, dass** für mindestens einen Wert der ganzen Zahl l, wobei gilt 0 ≤ 1 ≤ L-1, der Emitter außerdem Einrichtungen enthält, um:

- für p = 0, 1, ..., N-1 einen Datenvektor $X^{(L)}$ mit N realen Komponenten in einen codierten Datenvektor $W^{(L,p)} = \Pi^{(p)} (A^{(L)} \cdot X^{(L)})$ zu codieren, wobei $A^{(L)}$ ein vorbestimmter Codiervektor mit N Komponenten ungleich Null ist, die Bezeichnung « U.V » das Ergebnis der Multiplikation Term für Term von zwei Vektoren U und V gleicher Länge bezeichnet, und $\Pi^{(p)} (U)$ die zirkuläre Permutation von r Stufen der Komponenten eines Vektors U bezeichnet, wobei gilt r = p + c oder r = -p + c, und c eine vorbestimmte relative ganze Zahl ist, und
- für p = 0, 1, ..., N-1 den codierten Datenvektor $W^{(L,p)}$ auf jeder der M Sendeantennen auf den Unterträger 1 zu senden, mit einer Vorcodierung mit Zeitumkehr unter Verwendung einer Schätzung $\hat{H}^{(L)}$ der Transfermatrix des MIMO-Kanals, der den Emitter mit dem Empfänger verbindet, für den Unterträger l, und Fokussierung der n-ten Komponente des codierten Datenvektors $W^{(L,p)}$, wobei gilt n = 1, 2, ..., N, auf die n-te Empfangsantenne.

9. Drahtloser Empfänger, der mit N ≥ 2 Empfangsantennen versehen ist, der Einrichtungen enthält, um Daten zu empfangen, die mittels einer L ≥ 1 Unterträger enthaltenden OFDM/OQAM-Modulation übertragen wurden, **dadurch gekennzeichnet, dass** er für mindestens einen Wert der ganzen Zahl l, wobei gilt 0 ≤ 1 ≤ L-1, außerdem Einrichtungen enthält, um:

- für p = 0, 1, ..., N-1 einen empfangenen Vektor $Y^{(L,p)}$ mit N realen Komponenten zu bestimmen, dessen n-te Komponente, wobei gilt n = 1, 2, ..., N, gleich dem dem Unterträger 1 zugeordneten Symbol ist, das auf der n-ten Empfangsantenne empfangen wird, nach OFDM/OQAM-Modulation und Extraktion des realen Teils, und,
- für p = 0, 1, ..., N-1 den empfangenen Vektor $Y^{(L,p)}$ in einen codierten empfangenen Vektor $Z^{(L,p)} = A^{(L)} . (\Pi^{(p)}(Y^{l,p}))$ zu codieren, wobei $A^{(L)}$ ein vorbestimmter Codiervektor mit N Komponenten ungleich Null ist, die Bezeichnung « U.V » das Ergebnis der Multiplikation Term für Term von zwei Vektoren U und V gleicher Länge bezeichnet, $\Pi^{(p)}(U)$ die zirkuläre Permutation von r Stufen der Komponenten eines Vektors U bezeichnet, wobei gilt r = p+c oder r = -p+c, und c eine vorbestimmte relative ganze Zahl ist,
- einen decodierbaren Vektor $\mathfrak{J}$ zu berechnen, und
- einen Vektor decodierter Daten $T^{(L)}$ folgendermaßen zu berechnen:

$$T^{(L)} = S^{(L)} . F^{(L)},$$

wobei gilt $S^{(L)} = (R^{(L)})^{-1}$ und $R^{(L)}$ die Matrix des äquivalenten MIMO-Kanals zwischen dem Emitter und dem Empfänger für den Unterträger 1 ist, definiert durch

$$F^{(L)} = R^{(L)} . X^{(L)} + B^{(L)},$$

wobei $B^{(L)}$ ein Term des thermischen Rauschens ist.

10. Drahtloses Kommunikationssystem, das einen drahtlosen Emitter nach Anspruch 8 und einen drahtlosen Empfänger nach Anspruch 9 enthält, wobei der Emitter und der Empfänger sich gegenseitig synchronisieren können.

11. Nicht entfernbare, oder teilweise oder ganz entfernbare Datenspeichereinrichtung, die EDV-Programmcodeanweisungen zur Ausführung der Schritte eines drahtlosen Sendeverfahrens nach Anspruch 1 oder eines drahtlosen Empfangsverfahrens nach Anspruch 4 oder eines drahtlosen Kommunikationsverfahrens nach Anspruch 7 aufweist.

12. Computerprogramm, das von einem Kommunikationsnetz herunterladbar und/oder auf einem computerlesbaren Träger gespeichert und/oder von einem Mikroprozessor ausführbar ist, **dadurch gekennzeichnet, dass** es Anweisungen zur Ausführung der Schritte eines drahtlosen Sendeverfahrens nach Anspruch 1 oder eines drahtlosen Empfangsverfahrens nach Anspruch 4 oder eines drahtlosen Kommunikationsverfahrens nach Anspruch 7 aufweist.

## Claims

1. Method of wireless transmission, by a transmitter furnished with **M** ≥ 1 transmit antenna(s), of data intended for a receiver furnished with **N** ≥ 2 receive antennas, in which said data are transmitted by means of an OFDM/OQAM modulation comprising L ≥ 1 sub-carriers, **characterized in that**, for at least one value of the integer *l*, where 0 ≤ *l* ≤ L - 1, said transmitter implements **N** steps, step number *p*, where *p* = 0,1, ..., N-1, comprising the following sub-steps:

- coding, E1_p, of a data vector $X^{(l)}$ with **N** real components into a coded data vector $W^{(l,p)} = \Pi^{(p)}(A^{(l)}.X^{(l)})$, where $A^{(l)}$ is a predetermined coding vector with **N** non-zero components, the notation **"U.V"** designates the result of the term by term multiplication of two vectors **U** and **V** of the same length, and $\Pi^{(p)}(U)$ designates the circular permutation by r places of the components of a vector **U,** where *r* = *p* + c or *r* = -p+c, and *c* is a predetermined relative integer, and
- transmission, E2_p, of said coded data vector $\mathbf{W}^{(l,p)}$ on each of the $M$ transmit antennas on the sub-carrier $l$, with a Time Reversal precoding using an estimation $\hat{\mathsf{H}}^{(l)}$ of the transfer matrix of the MIMO channel which links said transmitter to said receiver for the sub-carriers $l$ and focusing the $n$-th component of the coded data vector $\mathbf{W}^{(l,p)}$, where $n = 1,2,..,N$, on the $n$-th receive antenna.

2. Method of wireless transmission according to Claim 1, **characterized in that** said coding vector $\mathbf{A}^{(l)}$ is such that all its components are equal to one another.

3. Method of wireless transmission according to Claim 1, **characterized in that** the number of receive antennas $N$ is even, and **in that** said coding vector $\mathbf{A}^{(l)}$ is such that its components of even indices are equal to one another, and its components of odd indices are equal to one another and opposite to the components of even indices.

4. Method of wireless reception by a receiver furnished with $N \geq 2$ receive antennas, in which the data received have been transmitted by means of an OFDM/OQAM modulation comprising $L \geq 1$ sub-carriers, **characterized in that**, for at least one value of the integer $l$, where $0 \leq l \leq L$-1:

a) said receiver implements firstly $N$ steps, step number $p$, where $p =0,1,..., N$-1, comprising the following sub-steps:

- determination, R1_p, of a received vector $\mathbf{Y}^{(l,p)}$ with $N$ real components, whose $n$-th component, where $n = 1,2,...,N$, is equal to the symbol associated with the sub-carrier $l$ received on the $n$-th receive antenna, after OFDM/OQAM demodulation and extraction of the real part, and
- coding, R2_p, of said received vector $\mathbf{Y}^{(l,p)}$ into a coded received vector

$$\mathbf{Z}^{(l,p)} = \mathbf{A}^{(l)} \cdot \left( \mathbf{\Pi}^{(p)}(\mathbf{Y}^{(l,p)}) \right),$$

where $\mathbf{A}^{(l)}$ is a predetermined coding vector with $N$ non-zero components, the notation **"U.V"** designates the result of the term by term multiplication of two vectors $\mathbf{U}$ and $\mathbf{V}$ of the same length, $\Pi^{(p)}$ ($\mathbf{U}$) designates the circular permutation by $r$ places of the components of a vector $\mathbf{U}$, where $r = p + c$ or $r = -p + c$, and $c$ is a predetermined relative integer,

b) the receiver calculates, R3, a decodable vector

$$\mathbf{F}^{(l)} = \sum_{p=0}^{N-1} \mathbf{Z}^{(l,p)},$$

and
c) the receiver calculates, R4, a decoded data vector $\mathbf{T}^{(l)}$ as follows:

$$\mathbf{T}^{(l)} = \mathbf{S}^{(l)} \cdot \mathbf{F}^{(l)},$$

where $\mathbf{S}^{(l)} = (\mathbf{R}^{(l)})^{-1}$ and $\mathbf{R}^{(l)}$ is the matrix of the equivalent MIMO channel between the transmitter and the receiver for the sub-carrier $l$, defined by

$$\mathbf{F}^{(l)} = \mathbf{R}^{(l)} \cdot \mathbf{X}^{(l)} + \mathbf{B}^{(l)},$$

where $\mathbf{B}^{(l)}$ is a thermal noise term.

5. Method of wireless reception according to Claim 4, **characterized in that** said coding vector $\mathbf{A}^{(l)}$ is such that all its components are equal to one another.

6. Method of wireless reception according to Claim 4, **characterized in that** the number of receive antennas $N$ is even, and **in that** said coding vector $\mathbf{A}^{(l)}$ is such that its components of even indices are equal to one another, and its components of odd indices are equal to one another and opposite to the components of even indices.

7. Method of wireless communication, **characterized in that** it comprises the steps of a method of transmission according to Claim 1, and the steps of a method of reception according to Claim 4, and **in that** said steps number $p$, where $p = 0, 1, ....N - 1$, are synchronized between the transmitter and the receiver.

8. Wireless transmitter furnished with $M \geq 1$ transmit antenna(s), comprising means for transmitting data intended for a receiver furnished with $N \geq 2$ receive antennas by means of an OFDM/OQAM modulation comprising $L \geq 1$ sub-carriers, **characterized in that**, for at least one value of the integer $l$, where $0 \leq l \leq L\text{-}1$, said transmitter furthermore comprises means for:

   - coding, for $p = 0, 1,...,N - 1$, a data vector $\mathbf{X}^{(l)}$ with $N$ real components into a coded data vector $\mathbf{W}^{(l,p)} = \Pi^{(p)}(\mathbf{A}^{(l)}.\mathbf{X}^{(l)})$, where $\mathbf{A}^{(l)}$ is a predetermined coding vector with $N$ non-zero components, the notation **"U.V"** designates the result of the term by term multiplication of two vectors $\mathbf{U}$ and $\mathbf{V}$ of the same length, and $\Pi^{(p)}(\mathbf{U})$ designates the circular permutation by $r$ places of the components of a vector $\mathbf{U}$, where $r = p + c$ or $r = -p + c$, and $c$ is a predetermined relative integer, and
   - transmitting, for $p = 0, 1, ..., N - 1$, said coded data vector $\mathbf{W}^{(l,p)}$ on each of the $M$ transmit antennas on the sub-carrier $l$, with a Time Reversal precoding using an estimation $\hat{\mathbf{H}}^{(l)}$ of the transfer matrix of the MIMO channel which links said transmitter to said receiver for the sub-carrier $l$ and focusing the $n^*$-th component of the coded data vector $\mathbf{W}^{(l,p)}$, where n = 1,2, ....,$N$, on the $n$-th receive antenna.

9. Wireless receiver furnished with $N \geq 2$ receive antennas, comprising means for receiving data which have been transmitted by means of an OFDM/OQAM modulation comprising $L \geq 1$ sub-carriers, **characterized in that**, for at least one value of the integer $l$, where $0 \leq l \leq -1$, it furthermore comprises means for:

   - determining, for $p = 0,1, ..., N - 1$, a received vector $\mathbf{Y}^{(l,p)}$ with $N$ real components, whose $n$-th component, where $\mathbf{n = 1,2,......,N}$, is equal to the symbol associated with the sub-carrier $l$ received on the $n$-th receive antenna, after OFDM/OQAM demodulation and extraction of the real part,
   - coding, for $\mathbf{p = 0,1}...,\mathbf{N\text{-}1}$, said received vector $\mathbf{Y}^{(l,p)}$ into a coded received vector

$$\mathbf{Z}^{(l,p)} = \mathbf{A}^{(l)}.\left(\Pi^{(p)}(\mathbf{Y}^{(l,p)})\right),$$

where $\mathbf{A}^{(l)}$ is a predetermined coding vector with $N$ non-zero components, the notation **"U.V"** designates the result of the term by term multiplication of two vectors $\mathbf{U}$ and $\mathbf{V}$ of the same length, $\Pi^{(p)}(\mathbf{U})$ designates the circular permutation by $r$ places of the components of a vector $\mathbf{U}$, where $r = p+c$ or $r = -p+c$, and $c$ is a predetermined relative integer,
   - calculating a decodable vector

$$\mathbf{F}^{(l)} = \sum_{p=0}^{N-1} \mathbf{Z}^{(l,p)},$$

and
   - calculating a decoded data vector $\mathbf{T}^{(l)}$ as follows:

$$\mathbf{T}^{(l)} = \mathbf{S}^{(l)} \cdot \mathbf{F}^{(l)},$$

where $\mathbf{S}^{(l)}=(\mathbf{R}^{(l)})^{-1}$ and $\mathbf{R}^{(l)}$ is the matrix of the equivalent MIMO channel between the transmitter and the receiver for the sub-carrier $l$, defined by

$$\mathbf{F}^{(l)} = \mathbf{R}^{(l)} \cdot \mathbf{X}^{(l)} + \mathbf{B}^{(l)},$$

where $\mathbf{B}^{(l)}$ is a thermal noise term.

10. Wireless communication system comprising a wireless transmitter according to Claim 8 and a wireless receiver according to Claim 9, said transmitter and said receiver being able to synchronize mutually.

11. Irremovable, or partially or totally removable means for storing data, comprising computer program code instructions for the execution of the steps of a method of wireless transmission according to Claim 1, or of a method of wireless reception according to Claim 4, or of a method of wireless communication according to Claim 7.

12. Computer program downloadable from a communication network and/or stored on a medium readable by computer and/or executable by a microprocessor, **characterized in that** it comprises instructions for the execution of the steps of a method of wireless transmission according to Claim 1, or of a method of wireless reception according to Claim 4, or of a method of wireless communication according to Claim 7.

**FIG. 1a**

**FIG. 1b**

**FIG. 1c**

**FIG. 2**

**FIG. 3a**

**FIG. 3b**

$Q\sqrt{2}$               $e^{-i\frac{\pi}{2}(j-\alpha)}$

$d'_{0,j}$    ⊗         ⊗    $d_{0,j}$

$Q\sqrt{2}e^{i\frac{2\pi}{Q}l\left(k-\frac{\lambda-1}{2}+\frac{Q}{4}\right)}$      $e^{-i\frac{\pi}{2}(j-\alpha)}$

$d'_{l,j}$    ⊗         ⊗    $d_{l,j}$

$Q\sqrt{2}e^{i\frac{2\pi}{Q}(Q-1)\left(k-\frac{\lambda-1}{2}+\frac{Q}{4}\right)}$      $e^{-i\frac{\pi}{2}(j-\alpha)}$

$d'_{Q-1,j}$    ⊗         ⊗    $d_{Q-1,j}$

**FIG. 3c**

$v[k]$ → S/P → polyphase → FFT → postdémodulation → $d_{0,j}$ ⋮ $d_{l,j}$ ⋮ $d_{Q-1,j}$

**FIG. 4**

$$p$$

$$\mathbf{J} \longrightarrow \boxed{\; \mathbf{\Pi}^{(p)}(.) \;} \longrightarrow \mathbf{K}$$

**FIG. 5**

$$\mathbf{X}^{(l)} = \begin{bmatrix} X_0^{(l)} \\ \vdots \\ X_n^{(l)} \\ \vdots \\ X_{N-1}^{(l)} \end{bmatrix} \longrightarrow \boxed{\cdot} \longrightarrow \boxed{\; \mathbf{\Pi}^{(p)}(.) \;} \longrightarrow \mathbf{W}^{(l,p)} = \begin{bmatrix} W_0^{(l,p)} \\ \vdots \\ W_n^{(l,p)} \\ \vdots \\ W_{N-1}^{(l,p)} \end{bmatrix}$$

$$p$$

$$\mathbf{A}^{(l)} = \begin{bmatrix} A_0^{(l)} \\ \vdots \\ A_n^{(l)} \\ \vdots \\ A_{N-1}^{(l)} \end{bmatrix}$$

**FIG. 6**

$$\mathbf{Y}^{(l,0)} \longrightarrow \boxed{\; \mathbf{\Pi}^{(p)}(.) \;} \longrightarrow \boxed{\; \cdot \;} \xrightarrow{\; \mathbf{Z}^{(l,0)} \;}$$
$$A^{(l)}$$

$$\mathbf{Y}^{(l,p)} \longrightarrow \boxed{\; \mathbf{\Pi}^{(p)}(.) \;} \longrightarrow \boxed{\; \cdot \;} \xrightarrow{\; \mathbf{Z}^{(l,p)} \;} \boxed{\; \Sigma \;} \longrightarrow \mathbf{F}^{(l)}$$
$$A^{(l)}$$

$$\mathbf{Y}^{(l,N-1)} \longrightarrow \boxed{\; \mathbf{\Pi}^{(p)}(.) \;} \longrightarrow \boxed{\; \cdot \;} \xrightarrow{\; \mathbf{Z}^{(l,N-1)} \;}$$
$$A^{(l)}$$

**FIG. 10**

**FIG. 7**

**FIG. 8**

**FIG. 9**

$$\begin{bmatrix} G_{0,0}^{(l)} & \cdots & G_{0,n}^{(l)} & \cdots & G_{0,N-1}^{(l)} \\ \vdots & \ddots & \vdots & \ddots & \vdots \\ G_{n,0}^{(l)} & \cdots & G_{n,n}^{(l)} & \cdots & G_{N-1,n}^{(l)} \\ \vdots & \vdots & \vdots & \ddots & \vdots \\ G_{N-1,0}^{(l)} & \cdots & G_{N-1,n}^{(l)} & \cdots & G_{N-1,N-1}^{(l)} \end{bmatrix}$$

$\Re$

$$\begin{bmatrix} \Gamma_{0,0}^{(l)} & \cdots & \Gamma_{0,n}^{(l)} & \cdots & \Gamma_{0,N-1}^{(l)} \\ \vdots & & \vdots & & \vdots \\ \Gamma_{n,0}^{(l)} & \cdots & \Gamma_{n,n}^{(l)} & \cdots & \Gamma_{N-1,n}^{(l)} \\ \vdots & & \vdots & & \vdots \\ \Gamma_{N-1,0}^{(l)} & \cdots & \Gamma_{N-1,n}^{(l)} & \cdots & \Gamma_{N-1,N-1}^{(l)} \end{bmatrix}$$

$\Pi^{(-p)}(.) \quad \cdots \quad \Pi^{(-p)}(.) \quad \cdots \quad \Pi^{(-p)}(.)$

$$\begin{bmatrix} G'^{(l,p)}_{0,0} & \cdots & G'^{(l,p)}_{0,n} & \cdots & G'^{(l,p)}_{0,N-1} \\ G'^{(l,p)}_{n,0} & \cdots & G'^{(l,p)}_{n,n} & \cdots & G'^{(l,p)}_{N-1,n} \\ \vdots & & & & \vdots \\ G'^{(l,p)}_{N-1,0} & \cdots & G'^{(l,p)}_{N-1,n} & \cdots & G'^{(l,p)}_{N-1,N-1} \end{bmatrix}$$

$\Pi^{(p)}(.)$

$\Pi^{(p)}(.)$

$\Pi^{(p)}(.)$

$$\begin{bmatrix} Q_{0,0}^{(l,p)} & \cdots & Q_{0,n}^{(l,p)} & \cdots & Q_{0,N-1}^{(l,p)} \\ \vdots & \ddots & \vdots & \ddots & \vdots \\ Q_{n,0}^{(l,p)} & \cdots & Q_{n,n}^{(l,p)} & \cdots & Q_{N-1,n}^{(l,p)} \\ \vdots & \ddots & \vdots & \ddots & \vdots \\ Q_{N-1,0}^{(l,p)} & \cdots & Q_{N-1,n}^{(l,p)} & \cdots & Q_{N-1,N-1}^{(l,p)} \end{bmatrix}$$

$$\begin{bmatrix} C_{0,0}^{(l)} & \cdots & C_{0,n}^{(l)} & \cdots & C_{0,N-1}^{(l)} \\ \vdots & \ddots & \vdots & \ddots & \vdots \\ C_{n,0}^{(l)} & \cdots & C_{n,n}^{(l)} & \cdots & C_{N-1,n}^{(l)} \\ \vdots & \ddots & \vdots & \ddots & \vdots \\ C_{N-1,0}^{(l)} & \cdots & C_{N-1,n}^{(l)} & \cdots & C_{N-1,N-1}^{(l)} \end{bmatrix}$$

$\cdot$

$$\begin{bmatrix} G''^{(l,p)}_{0,0} & \cdots & G''^{(l,p)}_{0,n} & \cdots & G''^{(l,p)}_{0,N-1} \\ G''^{(l,p)}_{n,0} & \cdots & G''^{(l,p)}_{n,n} & \cdots & G''^{(l,p)}_{N-1,n} \\ \vdots & & & & \vdots \\ G''^{(l,p)}_{N-1,0} & \cdots & G''^{(l,p)}_{N-1,n} & \cdots & G''^{(l,p)}_{N-1,N-1} \end{bmatrix}$$

**FIG. 11**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **P. SIOHAN ; C. SICLET ; N. LACAILLE.** Analysis and Design of OFDM/OQAM Systems Based on Filterbank Theory. *IEEE Transactions on Signal Processing,* Mai 2002, vol. 50 (5), 1170-1183

- **C. LÉLÉ ; P. SIOHAN ; R. LEGOUABLE.** The Alamouti Scheme with CDMA-OFDM/OQAM. *Eurasip Journal on Advances in Signal Processing,* 2010
- **B. LE FLOCH ; M. ALARD ; C. BERROU.** Coded Orthogonal Frequency Division Multiplex. *Proc. IEEE,* Juin 1995, vol. 83, 982-996